# FASCICULE DE BREVET EUROPEEN

(11) **EP 1 383 813 B1**
(45) Date de publication et mention de la délivrance du brevet: **01.04.2009**
(21) Numéro de dépôt: 02706873.3
(22) Date de dépôt: 18.02.2002
(51) Int. Cl.: C08F 293/00, C09D 153/00, D06M 15/21, C08J 7/04

(54) **UTILISATION DE COPOLYMERES A BLOCS A CARACTERE AMPHIPHILE POUR AUGMENTER L'AFFINITE POUR L'EAU DE SURFACES DE FAIBLES ENERGIES**
ANWENDUNG VON AMPHIPHILEN BLOCKCOPOLYMEREN FÜR DIE VERBESSERUNG DER HYDROPHILEN EIGENSCHAFTEN VON OBERFLÄCHEN MIT NIEDRIGER OBERFLÄCHENENERGIE
USE OF AMPHILIC BLOCK COPOLYMERS IN ORDER TO INCREASE THE WATER AFFINITY OF LOW-ENERGY SURFACES

(30) Priorité: 26.02.2001 US 793169; 04.05.2001 US 288844 P
(43) Date de publication de la demande: 28.01.2004
(73) Titulaire: RHODIA CHIMIE, 92512 Boulogne Billancourt Cedex (FR)
(72) Inventeur: QUEVAL, Lionel, F-95600 Eaubonne (FR); BONNET-GONNET, Cécile, F-75004 Paris (FR); DESTARAC, Mathias, F-75005 Paris (FR)
(74) Mandataire: Bernasconi, Jean Raymond
(86) Numéro de dépôt international: PCT/FR2002/000616
(87) Numéro de publication internationale: WO 2002/068487

(56) Documents cités:
- EP-A- 0 887 362
- EP-A- 1 086 980
- GB-A- 2 334 255
- US-A- 4 929 510
- US-A- 5 272 201
- US-A- 5 851 590
- US-A- 6 008 184
- DATABASE WPI Section Ch, Week 199351 Derwent Publications Ltd., London, GB; Class A14, AN 1993-410964 XP002240338 & JP 05 310972 A (NIPPON OILS & FATS CO LTD), 22 novembre 1993 (1993-11-22)
- DATABASE WPI Section Ch, Week 200019 Derwent Publications Ltd., London, GB; Class A95, AN 2000-215398 XP002240483 & JP 2000 034388 A (NIPPON GOSEI GOMU KK), 2 février 2000 (2000-02-02)
- DATABASE WPI Section Ch, Week 198607 Derwent Publications Ltd., London, GB; Class A14, AN 1986-045845 XP002240339 & JP 61 000239 A (MITSUBISHI MONSANTO KK), 6 janvier 1986 (1986-01-06)
- DATABASE WPI Section Ch, Week 198626 Derwent Publications Ltd., London, GB; Class A14, AN 1986-165861 XP002240340 & JP 61 098746 A (MITSUBISHI KASEI VINYL KK), 17 mai 1986 (1986-05-17)

## Description

La présente invention concerne l'utilisation d'un copolymère à blocs à caractère amphiphile, comportant au moins un bloc hydrophile et au moins un bloc hydrophobe, pour réaliser sur une surface de faible énergie telle qu'une surface à base d'un polymère plastique ou thermoplastique, un dépôt augmentant l'affinité de ladite surface vis-à-vis de l'eau, ce dépôt étant notamment utilisable pour améliorer l'efficacité de l'application ultérieure d'une composition aqueuse filmogène sur la surface ainsi modifiée.

L'invention concerne également un procédé d'application de compositions de peintures ou de mastics sur une surface de faible énergie, mettant à profit ce type d'utilisation, ainsi que les matériaux de type polymères plastiques ou thermoplastiques revêtus susceptibles d'être obtenus selon un tel procédé d'application.

Par surface de faible énergie au sens de l'invention, on entend des matériaux présentant une faible affinité pour l'eau, ce qui se traduit par une mouillabilité faible, voire nulle. Cette mouillabilité est évaluée par la mesure de l'angle de contact d'une goutte d'eau déposée sur la surface du matériau. Cet angle de contact, généralement dénommé angle alpha, correspond à l'angle existant entre la surface et la tangente à la goutte à l'interface surface/eau/air et peut être mesuré notamment à l'aide d'un appareil de mesure d'angle de contact usuel, tel que par exemple le SDT-200 commercialisé par la société IT Concept, utilisé en mode statique.
Les plaques doivent être parfaitement propres c'est à dire frottées préalablement à l'éthanol. De plus, elles sont reconditionnées, c'est-à-dire maintenues pendant 24 heures dans des conditions de température et d'humidité particulière dans une salle climatisée (22 °C, 55% d'humidité relative).
Cet angle peut être compris entre 0 et 180°.
- Si l'angle est nul, alors le mouillage est total. Le liquide s'étale complètement sur la surface et il existe donc des interactions fortes entre le support et le liquide.
- Si l'angle est de 180° alors le mouillage est nul. Le liquide forme une bille. Il n'y a qu'un point de contact entre le liquide et le support et surtout aucune affinité.
- Pour des angles intermédiaires, le mouillage est partiel.

Ainsi on considère que lorsque cet angle de contact est supérieur à 45°, alors le matériau a une surface de faible énergie.

De façon générale les matériaux de faible énergie possèdent un caractère hydrophobe. Par surface de nature "hydrophobe", on entend, au sens de l'invention, une surface caractérisée par un angle de contact d'une goutte d'eau supérieure ou égale à 45° et généralement supérieure à 70°. Le terme "hydrophile" est quant à lui employé pour désigner une surface caractérisée par un angle de contact d'une goutte d'eau inférieure à 45°, de préférence inférieure ou égale à 30°.

On peut citer à titre d'exemple de matériaux ayant une surface de faible énergie les polymères plastiques ou thermoplastiques tels que les polyamides, les polycarbonates, les polyéthylène-téréphtalate, le polyméthacrylate de méthyle, les polypropylènes, les polyéthylènes, les polystyrènes, les polyesters, l'acrylonitrile butadiène styrène (ABS) ou les polychlorures de vinyle.

Le tableau I de l'exemple 4 regroupe à titre illustratif les valeurs mesurées de l'angle alpha pour ces matériaux.

Ainsi, lorsqu'on applique directement sur la surface d'un de ces matériaux une composition aqueuse filmogène de type peinture ou mastic siliconé ou non on observe un très mauvais mouillage de la surface par la composition aqueuse, ce qui rend impossible l'application de cette composition, ou bien conduit, dans le meilleurs des cas, à l'obtention d'un revêtement de qualité médiocre.

De plus, les propriétés d'adhésion des revêtements ainsi obtenus se dégradent en présence d'humidité ou de contact avec l'eau de ces surfaces, notamment en raison de phénomènes de diffusion de l'eau à l'interface.

Pour l'ensemble de ces raisons, le dépôt d'une composition aqueuse filmogène de type peinture ou mastic siliconé ou non sur un support de faible énergie de surface, de type polymère plastique ou thermoplastique, n'est généralement pas envisageable au niveau industriel.

Or, la Demanderesse a découvert que certains copolymères à blocs à caractère amphiphile peuvent être utilisés pour réaliser, sur des surface de faible énergie, des dépôts présentant généralement une affinité forte vis-à-vis de ces surfaces et qui en modifient les propriétés, notamment en augmentant leur mouillabilité et/ou en leur conférant un caractère hydrophile.

Les modifications induites par la présence d'un dépôt à base de ces polymères à blocs permettent de palier aux problèmes rencontrés jusque là et il est possible d'obtenir une amélioration de l'efficacité de l'application d'une composition aqueuse filmogène de type peinture ou mastic, mais également une amélioration de l'adhésion sur le support de cette composition aqueuse filmogène effective et durable, même en présence d'eau.

Cette amélioration de l'adhésion du revêtement se traduit par un effet décoratif, protecteur ou fonctionnel prolongé, avantageusement pendant toute la durée de vie du produit, sans que l'effet induit par le revêtement réalisé ne soit susceptible d'être remis en cause par un lavage avec une solution aqueuse (S) de pH compris entre 1 et 12, comprenant éventuellement du chlorure de sodium, à raison d'une concentration maximale de 10M, un pelage ou une désagrégation dudit revêtement, notamment sous l'effet de contraintes mécaniques.

De façon plus générale, le dépôt à base des copolymères à blocs de l'invention possède le plus souvent une affinité telle vis à vis de la surface de faible énergie que la solidarisation de ce dépôt sur la surface traitée reste assurée pour des humidités relatives allant de 0 à 100%. Avantageusement, cette solidarisation reste assurée en présence d'eau, voire sous immersion dans l'eau, et ce y compris sur des surfaces de très faibles énergie et/ou fortement hydrophobes, telles que par exemple les surfaces à base de polypropylène ou un polyéthylène.

De par la modification des propriétés de surface qu'ils induisent, et compte tenu de leur tenue à l'eau, les dépôts à base des copolymères à blocs réalisés selon l'invention peuvent être mis en oeuvre dans de nombreux domaines d'application.

Ainsi, selon un premier aspect, la présente invention a pour objet l'utilisation d'un copolymère à blocs à caractère amphiphile comprenant au moins un bloc de nature hydrophobe (H) et au moins bloc de nature hydrophile (h), le bloc de nature hydrophobe présentant des motifs hydrophiles dans une quantité comprise entre 0 % et 95 % en poids et de préférence entre 0,1 et 90% en poids par rapport au poids total des motifs du bloc hydrophobe, ledit copolymère étant mis en solution dans de l'eau ou un mélange eau-alcool, pour réaliser sur une surface de faible énergie un dépôt augmentant l'affinité de ladite surface vis à vis de l'eau.

Par "augmentation de l'affinité d'une surface de faible énergie vis-à-vis de l'eau", on entend une augmentation de la mouillabilité de ladite surface par l'eau et les solutions aqueuses. Cette augmentation de l'affinité pour l'eau s'accompagne le plus souvent, de façon plus générale, d'une augmentation de la mouillabilité par des solvants polaires autre que l'eau tels que le glycérol.

Cette augmentation de la mouillabilité suite au dépôt du copolymère à blocs amphiphile de l'invention est mise en évidence en mesurant, dans les mêmes conditions de température et d'humidité relative, l'angle de contact présenté par une goutte d'eau déposée sur la surface, avant et après le dépôt dudit copolymère.

L'augmentation de la mouillabilité de la surface observée suite au dépôt du copolymère à blocs sur la surface se traduit par une diminution de l'angle de contact mesuré par rapport à l'angle mesuré avant ce dépôt. La diminution observée peut varier en une assez large mesure en fonction de la nature exacte de la surface de faible énergie sur laquelle le dépôt du copolymère à blocs est réalisé.

Toutefois, en règle générale, plus l'angle de contact mesuré initialement sera proche de 180°, plus la diminution de l'angle de contact obtenue suite au dépôt du copolymère sera susceptible d'être importante.

Ainsi, dans des conditions d'humidité relatives de à 0 à 100% et à des température de 15 à 35°C, le dépôt d'un copolymère à blocs selon l'invention permet par exemple, pour une surface de type méthacrylate, de passer d'un angle de contact de 72° à un angle inférieur à 62°.

Le copolymère à blocs amphiphile de l'invention peut avantageusement être mis en oeuvre pour conférer un caractère hydrophile à une surface présentant initialement une nature hydrophobe, comme par exemple certaines surfaces à base de polymères plastiques ou thermoplastiques.

Ainsi, l'invention concerne également une utilisation d'un copolymère à blocs à caractère amphiphile comprenant au moins un bloc de nature hydrophobe (H) et au moins bloc de nature hydrophile (h), le bloc de nature hydrophobe présentant des motifs hydrophiles dans une quantité comprise entre 0 % et 95 % en poids par rapport au poids total des motifs du bloc hydrophobe, ledit copolymère étant mis en solution dans de l'eau ou un mélange eau-alcool, pour rendre compatible une surface à caractère hydrophobe avec son environnement à caractère hydrophile.

De tels dépôts peuvent par exemple être appliqués sur des fibres de polyamides destinées à être utilisées à titre de charges renforçantes dans des compositions de fibrociments, et donc rendre ces fibres à l'origine hydrophobes compatibles dans un milieu hydrophile. Ces dépôts peuvent également êtres appliqués sur des fibres de type polyester ou polyamide afin de réaliser des tissus présentant une adaptabilité accrue au lavage.

Un aspect particulièrement avantageux de l'invention concerne une utilisation d'un copolymère à blocs à caractère amphiphile comprenant au moins un bloc de nature hydrophobe (H) et au moins bloc de nature hydrophile (h), le bloc de nature hydrophobe présentant des motifs hydrophiles dans une quantité comprise entre 0 % et 95 % en poids et de préférence entre 0,1 et 90% en poids par rapport au poids total des motifs du bloc hydrophobe, ledit copolymère étant mis en solution dans de l'eau ou un mélange eau-alcool, pour réaliser, sur une surface de faible énergie, un dépôt rendant efficace et durable une application ultérieure d'une composition aqueuse filmogène (F) sur ladite surface de faible énergie.

L'invention concerne donc un procédé d'application d'une composition aqueuse filmogène (F) sur une surface de faible énergie, comprenant les étapes suivantes :
(A) on applique sur ladite surface une formulation comprenant de l'eau ou un mélange eau-alcool contenant un copolymère à blocs à caractère amphiphile comprenant au moins un bloc de nature hydrophobe et au moins bloc de nature hydrophile, le bloc de nature hydrophobe présentant des motifs hydrophiles dans une quantité comprise entre 0 % et 95 % en poids par rapport au poids total des motifs du bloc hydrophobe, de façon à former sur ladite surface un dépôt sous la forme d'une couche continue; et
(B) on élimine au moins partiellement le solvant du dépôt obtenu à l'étape (A) ;et
(C) on applique sur la surface ainsi modifiée obtenue à l'étape(B) ladite composition aqueuse filmogène (F).

Le dépôt à base du copolymère à blocs réalisé selon l'invention peut être effectué en appliquant, sur la surface de faible énergie une solution comprenant ledit copolymère à blocs, ou bien en immergeant la surface à traiter dans une solution à base du copolymère à blocs, puis en éliminant ensuite au moins partiellement, et de préférence pour l'essentiel, le solvant initialement contenu dans cette solution, par exemple par séchage.

Par élimination partielle, on entend une élimination d'au moins 70% en masse du solvant initialement présent, de préférence d'au moins 80% en masse, et encore plus avantageusement d'au moins 90% en masse.

Une élimination du solvant "pour l'essentiel" correspond quant à elle à une élimination d'au moins 95% en masse du solvant initialement présent, de préférence d'au moins 97% en masse, et encore plus avantageusement d'au moins 99% en masse.

La solution à base du copolymère à blocs de l'étape (A) est de préférence une solution aqueuse ou hydro-alcoolique (par exemple dans un mélange eau/éthanol).

Cette solution utilisée quel que soit le solvant utilisé a une concentration en copolymère à blocs comprise, dans le cas le plus général, entre 0,01 et 10% en masse. De façon à obtenir un mouillage optimal du support et à éviter l'apparition d'hétérogénéités au sein du dépôt réalisé, on préfère utiliser une solution à une concentration comprise entre 0,05 et 7% en masse, et de manière encore plus préférentielle entre 0,1 et 3% en masse.

De telles teneurs confèrent à la formulation aqueuse une viscosité adaptée à une application sur la surface de faible énergie. De plus, ces teneurs mènent à l'obtention d'un film continu (sans apparition de zones de démouillage) lorsqu'on les applique à l'aide d'un tire film sur des surfaces planes, ou, de façon plus générale, lorsqu'on immerge la surface à traiter dans ladite solution.

En outre, ces concentrations sont particulièrement bien adaptées pour réaliser, par un simple séchage, une élimination partielle ou totale du solvant aqueux ou hydro-alcoolique présent dans le dépôt réalisé dans l'étape (A), élimination recommandée pour observer une amélioration effective de l'application de la composition (F) lors de l'étape (C).

Le séchage de l'étape (B) est effectué par exemple à une température comprise entre 15°C et 50°C (de préférence entre 19 et 25°C), et dans des conditions d'humidité comprises entre 10% et 70%, et de préférence entre 50% et 60%.

Dans le cas où le dépôt de l'étape (A) est réalisé à l'aide d'un tire-film, le film obtenu possède une épaisseur comprise entre 10 et 100 microns, et de façon avantageuse entre 40 et 60 microns. Ainsi, l'épaisseur du film déposé peut de façon encore plus avantageuse être de l'ordre de 50 microns.

Après le séchage de l'étape (B) on obtient un dépôt à base de polymère se présentant sous la forme d'une couche primaire continue d'accrochage d'épaisseur comprise entre 10 nm et 1 µm, avantageusement entre 40 et 600nm, et de préférence entre 50 et 500 nm.

Par "composition aqueuse filmogène", au sens de l'invention, on entend toute composition aqueuse sous la forme d'une dispersion ou d'une solution, généralement sous la forme d'une dispersion où la phase dispersée présente avantageusement une taille comprise entre 10Å à 100µm, et comprenant :
- à titre de phase continue ou de solvant, de l'eau, éventuellement en association avec d'autres composés hydrosolubles tels que des alcools, et notamment l'éthanol ; et
- des composés de type polymères ou précurseur de polymères, de résine acrylique ou de silicones, qui sont susceptibles de conduire à la formation d'un film polymère, d'un film acrylique ou d'un film silicone suite à l'application de la composition sur une surface et à l'évaporation au moins partielle de l'eau, et éventuellement des autres composés hydrosolubles tels que de l'éthanol.

Ainsi, de façon non limitative, les compositions aqueuses filmogènes de l'invention peuvent par exemple être des compositions comprenant une dispersion aqueuse ou hydro-alcoolique de polymères carbonés sous la forme d'un latex ou d'une formulation, de type adhésif, mastic ou peinture par exemple, comprenant un tel latex, ou de précurseurs de silicones et notamment une composition de mastic du type de celles décrites dans le documents EP 665 862, WO 98/13410 ou WO 99/65973.

Lors de l'application des copolymères à blocs de l'invention sur une surface hydrophobe, ces copolymères à blocs amphiphiles, associés en micelles, lamelles ou vésicules dans l'eau, suivant leur microstructure, s'adsorbent sur les surfaces de nature hydrophobe via le bloc qui a le plus d'affinités avec le support (par exemple, le bloc acrylate de sodium (h) sur polyamide et le bloc acrylate de butyle (H) sur polypropylène).

Ceci pourrait expliquer l'amélioration de la mouillabilité et/ou de l'augmentation du caractère hydrophile qui sont observées pour les surfaces de nature hydrophobe traitées par les copolymères à blocs de l'invention. Toutefois, il apparaît que les résultats d'adhérence obtenus sont, de façon surprenante, largement supérieurs à ceux auxquels on aurait pu s'attendre par la mise en oeuvre de telles molécules à titre d'agents de surface dans le cadre d'un tel modèle.

Ainsi, les énergies d'adhésion mesurées pour les dépôts réalisés à base des copolymères à blocs de l'invention sont au moins 10 fois plus importantes, et généralement de 50 à 1 000 fois plus importantes, que la valeur des forces cohésives (somme des forces Van der Waals et des forces de répulsion électrostatiques) qui devraient exister de façon théorique entre la surface et les copolymères à blocs utilisés.

Les copolymères à blocs mis en oeuvre dans la réalisation du dépôt de l'invention sont de préférence tels que leur bloc hydrophile (h) est constitué, au moins en partie, d'unités monomères choisies parmi :
- les acides mono- et di-carboxyliques insaturés éthyléniques tels que l'acide acrylique, l'acide méthacrylique, l'acide itaconique, l'acide maléique, ou l'acide fumarique,
- les mono-alkylesters des acides di-carboxyliques insaturés éthyléniques ci-dessus, de préférence avec des alcools en C₁-C₄, ainsi que leurs dérivés N-substitués, tels que par exemple l'acrylate ou le méthacrylate de 2-hydroxyéthyle,
- les amides des acides carboxyliques insaturés, comme l'acrylamide, le méthacrylamide, ou
- les monomères éthyléniques comprenant un groupe uréido tels que l'éthylène urée ethyl méthacrylamide, ou l'éthylène urée ethyl méthacrylate, ou
- les monomères éthyléniques comprenant au moins un groupement phosphate ou phosphonate acide, tel que l'acide vinyl phosphonique ou l'acide vinylidènephosphonique, ou
- les acrylates ou méthacrylates de polyéthylène glycol phosphatés, ou les acrylates ou méthacrylates de polypropylène glycol phosphatés, ou
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-sulfoéthylène-méthacrylate, ou
- les monomères cationiques choisis parmi les (méth)acrylates d'aminoalkyle, les (méth)acrylamides d'aminoalkyle ; les monomères comprenant au moins une fonction amine secondaire, tertiaire ou quaternaire, ou un groupe hétérocyclique contenant un atome d'azote, la vinylamine, l'éthylène imine ; les sels d'ammonium de diallyldialkyl ; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate, tels que le diméthyl amino éthyl (méth)acrylate, diméthyl amino propyl (méth)acrylate le ditertiobutyl aminoéthyl (méth)acrylate, le diméthyl amino méthyl (méth)acrylamide, le diméthyl amino propyl (méth)acrylamide ; l'éthylène imine, la vinylamine, la 2-vinylpyridine, la 4-vinylpyridine ; le chlorure de triméthylammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyle ; le chlorure d'ammonium de diallyldiméthyl seuls ou en mélanges, ou leurs sels correspondants, ou
- l'alcoolpolyvinylique résultant de l'hydrolyse d'un polyacétate de vinyle par exemple, ou
- les amides cycliques de la vinylamine, tel que le n-vinylpyrrolidone, ou
- un monomère hydrophile provenant d'une modification chimique d'un bloc hydrophobe par exemple par hydrolyse d'un polyacrylate d'alkyle en polyacide acrylique.

De préférence, les unités monomères présentes au sein du bloc hydrophile (h) sont choisies parmi l'acide acrylique (AA), l'acide 2-acrylamido-2-méthyl-propanesulfonique (AMPS), le sulfonate de styrène (SS), des monomères comprenant des groupement uréido, des monomères comprenant des groupement phosphates ou phosphonates ou leurs mélanges.

De manière encore plus préférentielle on utilise des unités d'acide acrylique (AA) ou des monomères éthyléniques comprenant des groupements uréido.

Le bloc hydrophobe (H) des copolymères à blocs mis en oeuvre dans la réalisation du dépôt de l'invention est de préférence constitué, au moins en partie, d'unités monomères choisies parmi :
- les monomères dérivés styréniques tels que le styrène, l'alphaméthylstyrène, le paraméthylstyrène ou le paratertiobutylstyrène, ou
- les esters de l'acide acrylique ou de l'acide méthacrylique avec des alcools en C1-C12, de préférence en C1-C8, éventuellement fluorés, tels que, par exemple, l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques contenant de 3 à 12 atomes de carbone, et notamment l'acrylonitrile ou le méthacrylonitrile,
- les esters vinyliques d'acides carboxyliques, comme l'acétate de vinyle, le versatate de vinyle, ou le propionate de vinyle,
- les halogénures de vinyle, par exemple le chlorure de vinyle, et
- les monomères diéniques, par exemple le butadiène ou l'isoprène.

De préférence, les unités monomères présentes au sein du bloc hydrophobe (H) du copolymère à blocs mis en oeuvre dans la réalisation du dépôt de l'invention sont des esters d'acide acryliques avec des alcools linéaires ou ramifiés en C1-C8, et en particulier en C1-C4, comme, par exemple, l'acrylate de méthyle, l'acrylate d'éthyle, l'acrylate de propyle, l'acrylate de butyle ou l'acrylate de 2-éthylhexyle, ou bien des dérivés styréniques tels que le styrène.

Ce bloc hydrophobe (H) peut contenir, en outre, entre 0 et 95% de monomères hydrophiles choisis dans la liste mentionnée ci-dessus de monomères hydrophiles (h).

Les copolymères à blocs selon l'invention peuvent avantageusement être des copolymères diblocs essentiellement constitués de l'association des deux blocs (h) et (H).

Les copolymères à blocs de l'invention peuvent aussi être des copolymères triblocs de formule (h)(H)(h') ou (H)(h)(H'), où (h') représente un bloc hydrophile similaire ou non à (h), et où (H') représente un groupe hydrophobe, similaire ou non à (H).

A titre de copolymères à blocs particulièrement avantageux dans le cadre de l'invention, on peut notamment citer les copolymères diblocs à base d'un bloc hydrophile poly(acide acrylique) et d'un bloc hydrophobe poly(acrylate de butyle), et en particulier les copolymères diblocs poly(acide acrylique)-poly(acrylate de butyle), dits PAA-PbuA.

Ces copolymères PAA-PbuA sont caractérisés par un rapport massique (acide acrylique)/(acrylate de butyle) qui peut être compris entre 10 : 90 et 90 : 10, et de préférence ce rapport est compris entre 10 : 90 et 50 : 50.

D'autres copolymères à blocs particulièrement avantageux dans le cadre de l'invention sont par exemple les copolymères à blocs dans lequel le bloc hydrophyle (h) est un poly(acide acrylique) et le bloc hydrophobe (H) est un copolymère statistique à base de styrène et d'acide acrylique contenant au moins 25%, de préférence 50%, et de manière encore plus préférentielle 75% en poids d'acide acrylique par rapport au poids total du mélange. Ces copolymères sont caractérisés par un rapport massique (bloc acide acrylique)/(bloc styrènique) qui peut être compris entre 95 :5 et 60 :40, et de préférence ce rapport est compris entre 85 :15 et 95 :5.

En général les copolymères à blocs amphiphiles utilisés dans l'invention présentent une masse moléculaire en nombre comprise entre 1 000 et 100 000. Le plus souvent, leur masse moléculaire en nombre est comprise entre 2 000 et 60 000.

Quelle que soit sa composition chimique exacte, le copolymère à blocs mis en oeuvre dans la réalisation du dépôt de l'invention peut avantageusement être préparé selon un procédé de polymérisation radicalaire contrôlée, réalisée en présence d'un agent de contrôle.

Par "polymérisation radicalaire contrôlée", on entend un procédé de polymérisation radicalaire spécifique, également désigné par le terme de "polymérisation vivante", dans lequel on met en oeuvre des agent de contrôle tels que les chaînes polymères en formation sont fonctionnalisées par des groupements terminaux susceptibles de pouvoir être réactivés sous forme de radicaux libres grâce à des réactions de terminaison et/ou de transfert réversibles.

A titre d'exemple de tels procédés de polymérisation, on peut notamment citer :
- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioesters de la demande WO 97/01478
- le procédé de la demande WO 99/03894 qui met en oeuvre une polymérisation en présence de précurseurs nitroxydes,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiophosphoroesters de la demande PCT/FR 01/02374.
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127, 991 (1975), Daikin Kogyo Co Itd Japan et Matyjaszewski et al., Macromolecules, 28, 2093 (1995),
- le procédé de polymérisation radicalaire contrôlée par les dérivés du tetraphényléthane, divulgué par D. Braun et al. dans Macromol. Symp. 111,63 (1996), ou encore
- le procédé de polymérisation radicalaire contrôlée par des complexes organocobalt décrit par Wayland et al. dans J.Am.Chem.Soc. 116,7973 (1994).

De façon générale, on préfère que les copolymères à blocs mis en oeuvre selon l'invention soient issus d'un procédé de polymérisation radicalaire contrôlée mettant en oeuvre, à titre d'agent de contrôle, un ou plusieurs composés choisis parmi les dithioesters, les thioethers-thiones, les dithiocarbamates, et les xanthates. De façon particulièrement avantageuse, les copolymères à blocs utilisés selon l'invention sont issus d'une polymérisation radicalaire contrôlée réalisée en présence d'agents de contrôle de type xanthates.

Selon un mode de mise en oeuvre préféré, le copolymère à blocs utilisé peut être obtenu selon un des procédés des demandes WO 98/58974, WO 00/75207 ou WO 01/42312 qui mettent en oeuvre une polymérisation radicalaire contrôlée par des agents de contrôle de type xanthates, ladite polymérisation pouvant être mise en oeuvre notamment en masse, en solvant, ou, de préférence en émulsion aqueuse, de façon à obtenir directement le copolymère sous forme d'une solution aqueuse ou hydro-alcoolique, ou aisément applicable à une teneur comprise entre 0,01 et 10% en masse. Une solution du copolymère à une teneur comprise entre 0,01 et 10% en poids obtenue directement par un procédé de polymérisation dans le même solvant organique est également utilisable.

Ainsi, on peut mettre en oeuvre un procédé comprenant les étapes suivantes :
(a) on réalise une polymérisation radicalaire contrôlée menant à l'obtention d'un polymère fonctionnalisé utile à titre d'agent de contrôle dans une réaction de polymérisation radicalaire contrôlée, ladite étape étant conduite en mettant en contact :
   - des molécules monomères éthyléniquement insaturées,
   - une source de radicaux libres, et
   - au moins un agent de contrôle de formule (I): 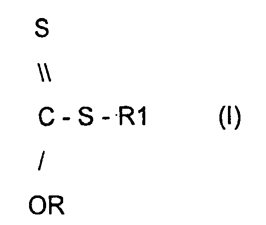 dans laquelle:
      - R représente :
         - H ou Cl;
         - un groupe alkyle, aryle, alcényle ou alcynyle ;
         - un cycle carboné, saturé ou non, éventuellement aromatique ;
         - un hétérocycle, saturé ou non, éventuellement aromatique ;
         - un groupe alkylthio,
         - un groupe alkoxycarbonyle, aryloxycarbonyle, carboxy, acyloxy, ou carbamoyle ;
         - un groupe cyano, dialkyl- ou diaryl-phosphonato, dialkyl- ou diaryl-phosphinato ;
         - une chaîne polymère,
         - un groupe (R2)O-, (R2)(R'2)N-, dans lesquels les radicaux R2 et R'2, identiques ou différents, représentent chacun :
            - un groupe alkyle, acyle, aryle, alcényle ou alcynyle ;
            - un cycle carboné, saturé ou non, éventuellement aromatique ; ou
            - un hétérocycle, saturé ou non, éventuellement aromatique ;
         et
      - R1 représente :
         - un groupe alkyle, acyle, aryle, alcényle ou alcynyle,
         - un cycle carboné, saturé ou non, éventuellement aromatique ;
         - un hétérocycle, saturé ou non, éventuellement aromatique; ou
         - une chaîne polymère,
(b) on réalise, suite à l'étape (a), une étape de polymérisation radicalaire contrôlée, ou plusieurs étapes successives de polymérisations radicalaires contrôlées, ladite ou lesdites étape(s) consistant chacune à effectuer une polymérisation radicalaire contrôlée menant à l'obtention d'un copolymère à blocs fonctionnalisé utile à titre d'agent de contrôle dans une réaction de polymérisation radicalaire contrôlée , ladite ou lesdites étapes étant conduite(s) en mettant en contact :
   - des molécules monomères éthyléniquement insaturées différentes de celles mis en oeuvre dans l'étape précédente,
   - une source de radicaux libres, et
   - le polymère fonctionnalisé issu de l'étape précédente.

Il est entendu que l'une des étapes de polymérisation (a) et (b) définies ci-dessus conduit à la formation du bloc hydrophile (h), et qu'une autre des étapes de polymérisation des étapes (a) et (b) conduit à la formation du bloc hydrophobe (H). Il est en particulier à noter que les monomères éthyléniquement insaturés mis en oeuvre dans les étapes (a) et (b) sont choisis parmi les monomères adaptés pour obtenir un copolymère à blocs amphiphile présentant les blocs (h) et (H) tels que définis précédemment.

Ainsi, dans le cadre de la formation du bloc hydrophobe (H), les monomères mis en oeuvre peuvent par exemple avantageusement être des esters d'acide acryliques avec des alcools linéaires ou ramifiés en C1-C4 , comme, par exemple, l'acrylate de méthyle, d'éthyle, de propyle ou de butyle, seuls ou en mélange avec d'autres monomères, ou bien du styrène en mélange avec au moins 25% en poids d'acide acrylique par rapport au poids total du bloc hydrophobe (H).

De façon générale, les étapes de polymérisation (a) et (b) sont mises en oeuvre dans un milieu solvant constitué d'eau et/ou d'un solvant organique tel que le tetrahydrofuranne ou un alcool aliphatique en C1-C8, linéaire, cyclique ou ramifié tel que le méthanol, l'éthanol, ou le cyclohexanol, ou encore un diol tel que l'éthylèneglycol.

Un solvant alcoolique est plus particulièrement recommandé dans le cadre de la mise en oeuvre de monomères hydrophiles du type de l'acide acrylique (AA), de l'acrylamide (AM), de l'acide 2-acrylamido-2-méthyl-propanesulfonique (AMPS), et du sulfonate de styrène (SS) et/ou dans le cadre de la mise en oeuvre de monomères hydrophobes tels que l'acrylate de n-butyle, l'acrylate d'isobutyle, l'acrylate de 2-éthylhexyle, ou l'acrylate de t-butyle.

De façon générale, les matériaux obtenus par la mise en oeuvre de ce procédé sont tels qu'ils présentent une cohésion forte entre la surface et le revêtement réalisé.

En règle générale, l'affinité du revêtement pour la surface de faible énergie est telle que la force de pelage à 90° de ce dépôt à une vitesse de pelage de 300mm/mn, mesurable par exemple à l'aide d'un dynamomètre de type Adamel-Lhomagry DY-30, est généralement supérieure ou égal à 0,5 N/mm, avantageusement supérieure à 1 N/mm, voire à 2 N/mm. Dans certains cas la force de pelage peut même être supérieure à 3 N/mm.

Cette forte affinité du revêtement pour le support se traduit naturellement par une très bonne stabilité du revêtement sur la surface.

En outre, l'adhésion du revêtement sur la surface n'est pas remise en cause en présence d'eau.

Ainsi, même lorsque le matériau est maintenu pendant une durée de 72 heures dans des conditions d'humidité relatives de 100%, la force pelage à 90° du dépôt reste généralement supérieure à 0,5 N/mm, et il n'est pas rare qu'elle reste supérieure à 1 N/mm, voire à 2 N/mm à une vitesse de pelage de 300 mm/mn.

Dans le cas des surfaces peintes, la stabilité du dépôt peut également être mise en évidence par un test de résistance à l'abrasion humide, selon la norme DYN 53778, consistant à frotter le revêtement obtenu avec une brosse de dureté et de poids normalisés sous un goutte à goutte d'eau additivée de tensioactif qui entretient le mouillage de la surface, et à mesurer le nombre de cycle de brossage nécessaire pour retirer le revêtement sur toute son épaisseur de façon à découvrir le support.

L'intérêt de la mise en oeuvre des copolymères de l'invention ressort clairement de la mise en oeuvre de tels tests, où on constate que la tenue d'un revêtement adhésif est largement accrue en présence de ces copolymères à blocs.

L'objet et les avantages de la présente invention apparaîtront de façon encore plus évidente au vu des différents exemples de mise en oeuvre exposés ci-après.

### Exemple 1 : Préparation d'un copolymère dibloc poly(acrylate de butyle)-poly(acide acrylique) selon l'invention, caractérisé par un rapport (acrylate de butyle)/poly(acide acrylique) de 50 : 50 en poids.

On introduit dans un réacteur muni d'un agitateur magnétique et d'une colonne à reflux, et comprenant 160 g d'acétone, le mélange suivant :
- 3,04 g de O-éthyl dithiocarbonate (désigné plus simplement par le terme "xanthate" ci-après)
- 21,24 g d'isopropanol, et
- 0,82 g d'azo-bis-isobutyronitrile (AIBN).

Le mélange est ensuite été agité et maintenu à reflux à 70°C.

On a ajouté 66g d'acide acrylique (AA) et 15g d'eau graduellement pendant 3 heures. Puis 0,41 g d'azo-bis-isobutyronitrile ont été ajoutés après une heure d'addition, puis encore 0,41 g d'azo-bis-isobutyronitrile ont été ajoutés après une seconde heure d'addition.

Une fois l'addition d'acide acrylique terminée, on laisse la polymérisation se poursuivre pendant une autre heure. Un quantité de 0,20g de mélange réactionnel est prélevée comme échantillon de PAA homopolymère.

La température est ensuite baissée à 65°C, par addition de 560g d'acétone.

Tout en maintenant la température à 65°C, on ajoute, graduellement, 140g d'acrylate de butyle (BA) pendant 3 heures. On ajoute 0,40g d'AIBN au commencement de l'addition de BA. On laisse la réaction se poursuivre pendant encore 3 heures. Le mélange réactionnel est refroidit et les solvants sont pratiquement complètement éliminés à l'aide d'un rotavapeur (évaporateur tournant). Le résidu obtenu est dispersé dans l'eau, et lyophilisé. Le polymère obtenu est analysé par résonance magnétique nucléaire du carbone 13 et par une mesure de sa teneur en acide.

La masse moléculaire en nombre du copolymère est de 15 000.

La température de transition vitreuse du bloc hydrophobe est de -54°C.

La tension de surface est de 55 mN/m à 10⁻⁴ mole/I.

### Exemple 2 : Préparation d'un copolymère dibloc poly(acrylate de butyle)-poly(acide acrylique) selon l'invention caractérisé par un rapport (acrylate de butyle)/poly(acide acrylique) de 70 : 30 en poids.

On introduit sous atmosphère d'azote dans un réacteur muni d'un agitateur magnétique et d'une colonne à reflux, et comprenant 160 g d'acétone, le mélange suivant :
- 0,61 g de xanthate
- 4,25 g d'isopropanol,
- 0,16 g d'azo-bis-isobutyronitrile

Le mélange ainsi obtenu est mis sous et maintenu à reflux à 70°C. On ajoute 13,2g d'acide acrylique (AA) et 30,3g d'eau, graduellement, pendant 3 heures. Puis 0,08 g d'azo-bis-isobutyronitrile sont ajoutés après une heure d'addition puis encore 0,08 g d'azo-bis-isobutyronitrile sont ajoutés après une seconde heure d'addition. Une fois l'addition d'acide acrylique terminée, on laisse la polymérisation se poursuivre pendant une autre heure. Un quantité de 4,1 g de mélange réactionnel est prélevée comme échantillon de PAA homopolymère.

La température est ensuite abaissée à 65°C par addition de 112g d'acétone. Tout en maintenant la température à 65°C, on ajoute, graduellement, 28g d'acrylate de butyle (BA) pendant 3 heures. On ajoute 0,08g d'AIBN au commencement de l'addition de BA. On arrête la purge d'azote et on laisse la réaction se poursuivre pendant encore 12 heures. Le mélange réactionnel est refroidit et les solvants sont pratiquement complètement éliminés à l'aide d'un rotavapeur (évaporateur tournant). Le résidu obtenu est dispersé dans l'eau, et lyophilisé. Le polymère obtenu est analysé par résonance magnétique nucléaire du carbone 13 et par la mesure de la teneur en acide.

La masse moléculaire en nombre est de 15 000.

La température de transition vitreuse du bloc hydrophobe est de :-54°C.

La tension de surface est de 52 mN/m à 10⁻⁴ mole/I.

### Exemple 3 : Préparation d'un copolymère dibloc poly(styrène-co-acide acrylique)-poly(acide acrylique) selon l'invention, caractérisé par un bloc hydrophobe de 2K et un bloc hydrophile de14K avec un taux variable d'acide acrylique dans le bloc hydrophobe (en particulier 73%).

### 1) Synthèse d'un copolymère statistique de styrène, d'acide méthacrylique et d'acrylate d'ethyle avec des rapports massiques: St/AMA/AEt = 25/2/73.

La polymérisation est réalisée en émulsion, dans un réacteur double enveloppe muni d'une agitation tri-pâle en inox. En pied de cuve, on introduit, à température ambiante, 875 g d'eau, 13,9 g de sulfate de dodécyle, sel du sodium (Aldrich), 0,31 g de carbonate de sodium Na₂CO₃. Le mélange obtenu est agité pendant 30 minutes (190 tr/min) sous azote. L'agitation continue pour une durée supplémentaire de 55 minutes pendant laquelle la température est élevée à 75°C, puis on incorpore un mélange comprenant 2,16 g de styrène, et 9,01 g de alpha-(o-éthylxanthyl) propionate de méthyle (CH₃CHCO₂Me)SCSOEt, 0,17 g d'acide méthacrylique et 6,32 g d'acrylate d'ethyl. La température est ensuite élevée à 85°C et on ajoute 1,58 g de persulfate d'ammonium (NH₄)₂S₂O₈. Après cinq minutes, on continue à ajouter 19,49 g de styrène, 1,56 g d'acide méthacrylique et 56,91 g d'acrylate d'ethyl pendant une heure. Apres l'addition complète, on obtient un polymère en émulsion (latex), qui est maintenu à 85°C pendant une heure.

On prélève 197,29 g du copolymère en émulsion précédemment obtenu. On lui additionne à 85°C 0,79 g de persulfate d'ammonium (NH₄)₂S₂O₈ et 3,5g d'eau. Apres cinq minutes, on commence l'addition d'un mélange composé de:
- 661,27 g d'acrylate d'éthyle (AEt),
- 13,49 g d'acide méthacrylique (AMA),

Et simultanement un autre composé de:
- 420 g d'eau
- 0,75 g de Na₂CO₃

L'addition dure 1 heure. Le système est maintenu à cette température pendant trois heures supplémentaires.

### 2) Hydrolyse du copolymère dibloc:

L'hydrolyse aussi est effectuée dans un réacteur double enveloppe muni d'une agitation tri-pâle en inox. On y introduit:
- 54 g du copolymère précédent (l'extrait sec à 35,09 %),
- 250,8g d'eau (pour ajuster l'extrait sec à 4 %).

La température est portée à 85°C et cependant l'émulsion est agitée vigoureusement. Ensuite on y ajoute 182 g de soude 2N (correspondant à deux équivalents molaires de soude par rapport à l'acrylate d'éthyle) pendant deux heures. Après addition complète de la soude, la température est portée à 95°C et la réaction est maintenue dans ces conditions pendant 48 heures.

### Exemple 4 : Utilisation de copolymères diblocs poly(acrylate de butyle)-poly(acide acrylique) selon l'invention pour améliorer l'efficacité du dépôt d'un latex sur un support de type polymère thermoplastique

Les copolymères diblocs poly(acrylate de butyle)-poly(acide acrylique) obtenus dans les exemples 1 et 2 sont mis en oeuvre pour réaliser le dépôt d'une couche primaire d'adhésion sur différents supports plans en polymères thermoplastiques. La couche primaire réalisée est ensuite utilisée pour réaliser le dépôt d'un latex. A titre comparatif, le dépôt du latex est également effectué sur une surface témoin sans couche primaire d'adhésion.

Le latex utilisé dans le cadre des différents essais réalisés dans cet exemple est un latex acrylique industriel utilisé notamment en peinture décorative, commercialisé par Rhodia sous la référence DS 1003.

Il s'agit d'une dispersion aqueuse de particules de copolymères styrène/acrylate de butyle dont le diamètre moyen est de 0,15 microns et caractérisé par une teneur en polymères de 50% en masse.

Dans chacun des essais réalisés, la surface du support mis en oeuvre a préalablement été nettoyée avec un chiffon imbibé d'éthanol, de façon à réaliser un dégraissage. Après nettoyage, chacun des supports est placé pendant 4 heures dans une pièce conditionnée à 22°C (+/- 3°C) et dans des conditions d'humidité relative de 55% (+/- 5%).

Les caractéristiques des supports sont donnés dans le tableau I ci-dessous :

**Tableau I**

| **Support** | **Formule** | **Angle formé par une goutte d'eau** |
|---|---|---|
| Polyamide 6,6 (Nylon - PA) | (-NH-CH₂)₆-NH-CO-(CH₂)₄-CO-) | 54° |
| Polycarbonates (PC) | (-O-CO-C-R-) | 77° |
| Polyéthylène téréphtalate (PETP) | (-Ar-CO-O-(CH₂)₂-) | 79° |
| Polymétacrylate de méthyle (PMMA) | (-CH₂-CMe(COOCH₂)-) | 72° |
| Polypropylène (PP) | (-CH₂-CH(Me)-) | 102° |
| Polystyrène (PS) | (-CH₂-CH(Ar-)-) | 81° |
| Polychlorure de vinyle (PVC) | (-CH₂-CHCl-) | 83° |
| ABS | Acrylonitrile, butadiène, styrène | 74° |

A l'exception des surfaces témoins, on applique, à l'aide d'un tire-film, sur la surface du support ainsi conditionné, un film d'épaisseur uniforme égale à 50 microns d'une solution du copolymère de l'exemple 1 ou de l'exemple 2 à une concentration de 1% en masse dans de l'eau déminéralisée, qui est soit additionnée d'acide chlorhydrique jusqu'à obtention d'un pH de 5, soit additionnée de soude jusqu'à obtention d'un pH de 8,5.

On laisse ensuite sécher le film ainsi formé pendant 12 heures, dans une pièce conditionnée à 22°C (+/- 3°C) et dans des conditions d'humidité relative de 55% (+/- 5%), de façon à réaliser une couche primaire d'adhésion.

On dépose ensuite le latex sur la surface, modifiée ou non par la présence de la couche primaire d'adhésion selon les essais, également à l'aide d'un tire film, de façon à réaliser un film de latex de 1,5 mm d'épaisseur, que l'on a recouvert immédiatement par une bande de toile de 25 mm de large, destinée à permettre d'effectuer ultérieurement un test de pelage à 90° du revêtement obtenu.

On laisse ensuite sécher ce film pendant 12 heures, dans une pièce conditionnée à 22°C (+/- 3°C) et dans des conditions d'humidité relative de 55% (+/- 5%).

On procède ensuite à un vieillissement accéléré du support revêtu ainsi obtenu, en le plaçant pendant 12 heures dans une étuve à 40°C et à 30% d'humidité relative.

On place ensuite les échantillons pendant 12 heures, dans une pièce conditionnée à 22°C (+/- 3°C) et dans des conditions d'humidité relative de 55% (+/- 5%).

Suite à ces différentes étapes, le support revêtu obtenu est immergé pendant 72 heures consécutives dans de l'eau déminéralisée.

A l'issu de ce trempage, on réalise un test de pelage à 90° du revêtement obtenu, consistant à tirer la bande de toile fixée sur le revêtement dans une direction perpendiculaire à la surface du support jusqu'à obtenir une désolidarisation du revêtement et de la surface, sur une longueur de 100 mm, en mesurant les forces mises en jeu à l'aide d'un dynamomètre Adamel-Lhomagry de type DY-30 avec un capteur de 100 N maximum.

A l'issu de ce test, on détermine une force de traction à 90° moyenne (T₉₀) exprimée en N/mm, qui reflète l'affinité du revêtement réalisé vis-à-vis de la surface du support et la stabilité de ce revêtement.

Les résultats obtenus dans les différents tests réalisés sont regroupés dans les tableaux II à VII ci-après :

**Tableau II : essais sur un support Polyamide**

| **Nature de la solution mise en oeuvre pour réaliser la couche primaire d'adhésion** | **T₉₀ (en N/mm)** |
|---|---|
| Pas de couche primaire d'adhésion (témoin) | 0,4 |
| Copolymère de l'exemple 1 en solution aqueuse à pH = 5 | 1,9 |
| Copolymère de l'exemple 1 en solution aqueuse à pH = 8,5 | 4,0 4,0 |
| Copolymère de l'exemple 2 en solution aqueuse à pH = 5 | 2,1 |
| Copolymère de l'exemple 2 en solution aqueuse à pH = 8,5 | 1,8 |

**Tableau III : essais sur un support Polycarbonate**

| **Nature de la solution mise en oeuvre pour réaliser la couche primaire d'adhésion** | **T₉₀ ( en N/mm)** |
|---|---|
| Pas de couche primaire d'adhésion (témoin) | 1,1 |
| Copolymère de l'exemple 1 en solution aqueuse à pH = 5 | 3,8 |
| Copolymère de l'exemple 1 en solution aqueuse à pH = 8,5 | 3,7 |
| Copolymère de l'exemple 2 en solution aqueuse à pH = 5 | 2,2 |
| Copolymère de l'exemple 2 en solution aqueuse à pH = 8,5 | 2,7 |

**Tableau IV: essais sur un support polyethylèneterephtalate**

| **Nature de la solution mise en oeuvre pour réaliser la couche primaire d'adhésion** | **T₉₀ ( en N/mm)** |
|---|---|
| Pas de couche primaire d'adhésion (témoin) | 1,0 |
| Copolymère de l'exemple 1 en solution aqueuse à pH = 5 | 2,4 |
| Copolymère de l'exemple 1 en solution aqueuse à pH = 8,5 | 3,0 |
| Copolymère de l'exemple 2 en solution aqueuse à pH = 5 | 3,0 |
| Copolymère de l'exemple 2 en solution aqueuse à pH = 8,5 | 2,0 |

**Tableau V: essais sur un support polyméthacrylate de méthyle**

| **Nature de la solution mise en oeuvre pour réaliser la couche primaire d'adhésion** | **T₉₀ ( en N/mm)** |
|---|---|
| Pas de couche primaire d'adhésion (témoin) | 0,6 |
| Copolymère de l'exemple 1 en solution aqueuse à pH = 5 | 3,3 |
| Copolymère de l'exemple 1 en solution aqueuse à pH = 8,5 | 3,6 |
| Copolymère de l'exemple 2 en solution aqueuse à pH = 5 | 3,0 |
| Copolymère de l'exemple 2 en solution aqueuse à pH = 8,5 | 3,1 |

**Tableau VI : essais sur un support polystyrène**

| **Nature de la solution mise en oeuvre pour réaliser la couche primaire d'adhésion** | **T₉₀ ( en N/mm)** |
|---|---|
| Pas de couche primaire d'adhésion (témoin) | 1,5 |
| Copolymère de l'exemple 1 en solution aqueuse à pH = 5 | 3,3 |
| Copolymère de l'exemple 1 en solution aqueuse à pH = 8,5 | 3,7 |
| Copolymère de l'exemple 2 en solution aqueuse à pH = 5 | 3,0 |
| Copolymère de l'exemple 2 en solution aqueuse à pH = 8,5 | 3,6 |

**Tableau VII : essais sur un support polychlorure de vinyle**

| **Nature de la solution mise en oeuvre pour réaliser la couche primaire d'adhésion** | **T₉₀ ( en N/mm)** |
|---|---|
| Pas de couche primaire d'adhésion (témoin) | 1,2 |
| Copolymère de l'exemple 1 en solution aqueuse à pH = 5 | 2,7 |
| Copolymère de l'exemple 1 en solution aqueuse à pH = 8,5 | 2,8 |
| Copolymère de l'exemple 2 en solution aqueuse à pH = 5 | 2,7 |
| Copolymère de l'exemple 2 en solution aqueuse à pH = 8,5 | 2,8 |

### Exemple 4 : Utilisation des copolymères diblocs poly(acrylate de butyle)-poly(acide acrylique) de l'invention pour améliorer la resistance à l'abrasion humide d'un revêtement de peinture déposée sur un support de polymère thermoplastique.

Le copolymère dibloc de l'exemple 1 a été mis en oeuvre pour réaliser le dépôt d'une couche primaire d'adhésion sur un support plan en PVC de couleur noire, référencé Papier Lénéta.

La surface du support mis en oeuvre a préalablement été nettoyée avec un chiffon imbibé d'éthanol, de façon à réaliser un dégraissage. Après nettoyage, le support a été placé pendant 4 heures dans une pièce conditionnée à 22°C (+/- 3°C) et dans des conditions d'humidité relative de 55% (+/- 5%).

On a ensuite appliqué, à l'aide d'un tire-film, sur la surface du support ainsi conditionné, un film d'épaisseur uniforme égale à 50 microns, d'une solution du copolymère de l'exemple 1 à une concentration de 1% en masse dans de l'eau déminéralisée, additionnée d'hydroxyde de sodium jusqu'à obtention d'un pH de 8,5.

On a ensuite laissé séché le film ainsi formé pendant 12 heures, dans une pièce conditionnée à 22°C (+/- 3°C) et dans des conditions d'humidité relative de 55% (+/- 5%), de façon à réaliser une couche primaire d'adhésion.

On a ensuite déposé sur la surface modifiée par la présence de la couche primaire d'adhésion, à l'aide d'un tire film, un film de 275 microns d'épaisseur humide d'une formulation de peinture (ce qui correspond à un film de peinture sèche de 100 microns environ) comprenant :
- 100 parties en poids de carbonate de calcium
- 10 parties en poids de latex DS 1003 tel que défini dans l'exemple 3
- de l'eau, ajoutée de façon à obtenir une formulation possédant un extrait sec de 72% en masse.

On a ensuite laissé séché le film obtenu pendant 21 jours, dans une pièce conditionnée à 22°C (+/- 3°C) et dans des conditions d'humidité relative de 55% (+/- 5%).

Suite à ces différentes étapes, le support revêtu obtenu a été soumis à un test de résistance à l'abrasion humide (noté RAH) tel que défini dans la norme DYN 53778, , qui évalue la résistance de la peinture au lavage et/ou au lessivage. Il consiste en l'abrasion cyclique d'un feuil de peinture par une brosse normalisée en masse et dureté sous un goutte-à-goutte d'une solution de savon. La RAH s'exprime comme le nombre de cycles d'abrasion supportable par le feuil avant de voir le support apparaître : 100% de la peinture a été retirée.

Le nombre de cycles d'abrasion humide nécessaire pour retirer 100 % du revêtement obtenu a été mesuré égal à 732.

A titre comparatif, la même expérience a été réalisée sur un support de PVC revêtu par la composition de peinture, en l'absence de couche primaire d'adhésion à base du copolymère de l'exemple 1. Le nombre de cycles d'abrasion humide nécessaire a alors été mesuré égal à 582, ce qui met bien en évidence l'amélioration de la cohésion entre le support et le revêtement induit par la mise en oeuvre du copolymère à blocs de l'invention à titre de couche primaire d'adhésion.

### Exemple 5 : Utilisation des copolymères diblocs poly(styrène-co-acide acrylique)-poly(acide acrylique) et poly(acrylate de butyle)-poly(acide acrylique) de l'invention pour améliorer l'adhérence de mastic siliconé sur un support de Polymère thermoplastique.

Le support polychlorure de vinyle a été nettoyé par essuyage avec un chiffon imbibé d'éthanol puis conditionné 24h à *environ* 55% d'humidité relative et 21°C.

Les copolymères diblocs utilisés sont les copolymères synthétisés dans les exemples 1 et 3, ainsi qu'un copolymère dibloc du type de l'exemple 3 PS-AA-b-PAA contenant 25% d'acide acrylique dans le bloc styrène. Ils sont solubles dans l'eau et ont été déposés à partir de solutions à 10 g/litre (et pH 8,5 pour les solutions aqueuses) au tire-film de 50µm puis séchés 24 heures en pièce conditionnée.

Ensuite une couche de mastic de 1,5 mm d'épaisseur a été déposée au tire-film avant d'être couverte d'un film de renfort en toile bleue elle-même recouverte d'une couche de mastic de 1 mm. Le tout sèche pendant 7 jours en pièce conditionnée avant pelage.

Un mastic disponible dans le commerce a été testé, à savoir le mastic Rhodia 10 T qui est une formulation anhydre.

Le test de pelage se fait par mesure de la force de traction du film de mastic selon un angle de 90° par rapport au support.

La vitesse de traction est de 300 mm/mn et la force est exprimée en fonction de la largeur du front de pelage, elle est exprimée en N/mm:

Les résultats obtenus sont regroupés dans le tableau VIII :

**Tableau VIII**

| **PVC** | **Pas de primaire (mastic seul)** | **Polymère de l'exemple 1** | **Polymère de l'exemple 3** | **Polymère du type de l'exemple 3 PS-AA-b-PAA contenant 25% d'acide acrylique dans le bloc styrène** |
|---|---|---|---|---|
| Rhodia 10 T | 1,6 | 1,6 | 3,0 | 2,4 |

## Revendications

1. Utilisation d'un copolymère à blocs à caractère amphiphile comprenant au moins un bloc de nature hydrophobe et au moins bloc de nature hydrophile, le bloc de nature hydrophobe présentant des motifs hydrophiles dans une quantité comprise entre 0 % et 95 % en poids par rapport au poids total des motifs du bloc hydrophobe, ledit copolymère étant mis en solution dans de l'eau ou un mélange eau-alcool, pour réaliser sur une surface de faible énergie un dépôt augmentant l'affinité de ladite surface vis à vis de l'eau.

2. Utilisation d'un copolymère à blocs à caractère amphiphile comprenant au moins un bloc de nature hydrophobe (H) et au moins bloc de nature hydrophile (h), le bloc de nature hydrophobe présentant des motifs hydrophiles dans une quantité comprise entre 0 % et 95 % en poids par rapport au poids total des motifs du bloc hydrophobe, ledit copolymère étant mis en solution dans de l'eau ou un mélange eau-alcool, pour réaliser sur une surface à caractère hydrophobe un dépôt rendant compatible cette surface avec un environnement à caractère hydrophile.

3. Utilisation selon la revendication 2, **caractérisée en ce que** la surface à caractère hydrophobe est une fibre.

4. Utilisation d'un copolymère à blocs à caractère amphiphile comprenant au moins un bloc de nature hydrophobe (H) et au moins bloc de nature hydrophile (h), le bloc de nature hydrophobe présentant des motifs hydrophiles dans une quantité comprise entre 0 % et 95 % en poids par rapport au poids total des motifs du bloc hydrophobe, ledit copolymère étant mis en solution dans de l'eau ou un mélange eau-alcool, pour réaliser, sur une surface de faible énergie, un dépôt rendant efficace et durable une application ultérieure d'une composition aqueuse filmogène (F) sur ladite surface de faible énergie.

5. Utilisation selon l'une quelconque des revendications précédentes, **caractérisée en ce que** le dépôt à base dudit copolymère à bloc est réalisé en appliquant, sur ladite surface de faible énergie, une solution comprenant ce copolymère à blocs, ou en immergeant ladite surface de faible énergie dans une solution à base du copolymère à blocs, puis en éliminant au moins partiellement le solvant initialement contenu dans cette solution.

6. Utilisation selon l'une quelconque des revendications précédentes, **caractérisée en ce que** la surface de basse énergie est une surface présentant un angle de contact d'une goutte d'eau déposée sur la surface correspondant à l'angle existant entre la surface et la tangente à la goutte à l'interface surface/eau/air est supérieur à 45°.

7. Utilisation selon l'une quelconque des revendications précédentes, **caractérisée en ce que** la surface de basse énergie est une surface à base d'un polyamide, d'un polycarbonate, d'un polyéthylène téréphtalate, d'un polyméthacrylate de méthyle, d'un polypropylène, d'un polyéthylène, d'un polystyréne, d'un polyester, d'un acrylonitrile butadiène styrène (ABS), ou d'un polychlorure de vinyle.

8. Utilisation selon l'une quelconque des revendications précédentes, **caractérisée en ce que** le dépôt de copolymère à bloc est réalisé sous la forme d'un film continu.

9. Utilisation selon l'une des revendications précédentes, **caractérisée en ce que** le copolymère à bloc mis en oeuvre est tel que son bloc hydrophile (h) est constitué, au moins en partie, d'unités monomères choisies parmi :
- les acides mono- et di-carboxyliques insaturés éthyléniques tels que l'acide acrylique, l'acide méthacrylique, l'acide itaconique, l'acide maléique, ou l'acide fumarique,
- les mono-alkylesters des acides di-carboxyliques insaturés éthyléniques ci-dessus, de préférence avec des alcools en C₁-C₄, ainsi que leurs dérivés N-substitués, tels que par exemple l'acrylate ou le méthacrylate de 2-hydroxyéthyle,
- les amides des acides carboxyliques insaturés, comme l'acrylamide, le méthacrylamide, ou
- les monomères éthyléniques comprenant un groupe uréido tels que l'éthylène urée ethyl méthacrylamide, ou l'éthylène urée ethyl méthacrylate, ou
- les monomères éthyléniques comprenant au moins un groupement phosphate ou phosphonate acide, tel que l'acide vinyl phosphonique ou l'acide vinylidènephosphonique, ou
- les acrylates ou méthacrylates de polyéthylène glycol phosphatés, ou les acrylates ou méthacrylates de polypropylène glycol phosphatés, ou
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-sulfoéthylène-méthacrylate, ou
- les monomères cationiques choisis parmi les (méth)acrylates d'aminoalkyle, les (méth)acrylamides d'aminoalkyle ; les monomères comprenant au moins une fonction amine secondaire, tertiaire ou quaternaire, ou un groupe hétérocyclique contenant un atome d'azote, la vinylamine, l'éthylène imine ; les sels d'ammonium de diallyldialkyl ; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate, tels que le diméthyl amino éthyl (méth)acrylate, diméthyl amino propyl (méth)acrylate le ditertiobutyl aminoéthyl (méth)acrylate, le diméthyl amino méthyl (méth)acrylamide, le diméthyl amino propyl (méth)acrylamide ; l'éthylène imine, la vinylamine, la 2-vinylpyridine, la 4-vinylpyridine ; le chlorure de triméthylammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyle ; le chlorure d'ammonium de diallyldiméthyl seuls ou en mélanges, ou leurs sels correspondants, ou
- l'alcoolpolyvinylique résultant de l'hydrolyse d'un polyacétate de vinyle par exemple, ou
- les amides cycliques de la vinylamine, tel que le n-vinylpyrrolidone, ou
- un monomère hydrophile provenant d'une modification chimique d'un bloc hydrophobe par exemple par hydrolyse d'un polyacrylate d'alkyle en polyacide acrylique.

10. Utilisation selon la revendication 9, **caractérisée en ce que** les unités monomères présentes au sein du bloc hydrophile (h) du copolymère à blocs mis en oeuvre sont des unités l'acide acrylique (AA), l'acide 2-acrylamido-2-méthyl-propanesulfonique (AMPS), le sulfonate de styrène (SS), des monomères comprenant des groupement uréido, des monomères comprenant des groupement phosphates ou phosphonates ou leurs mélanges.

11. Utilisation selon l'une des revendications précédentes, **caractérisée en ce que** le copolymère à blocs mis en oeuvre est tel que son bloc hydrophobe (H) est constitué, au moins en partie, d'unités monomères choisies parmi :
- les monomères dérivés styréniques tels que le styrène, l'alphaméthylstyrène, le paraméthylstyrène ou le paratertiobutylstyrène, ou
- les esters de l'acide acrylique ou de l'acide méthacrylique avec des alcools en C1-C12, de préférence en C1-C8, éventuellement fluorés, tels que, par exemple, l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques contenant de 3 à 12 atomes de carbone, et notamment l'acrylonitrile ou le méthacrylonitrile,
- les esters vinyliques d'acides carboxyliques, comme l'acétate de vinyle, le versatate de vinyle, ou le propionate de vinyle,
- les halogénures de vinyle, par exemple le chlorure de vinyle, et
- les monomères diéniques, par exemple le butadiène ou l'isoprène.

12. Utilisation selon la revendication 11, **caractérisée en ce que** les unités monomères présentes au sein du bloc hydrophobe (H) du copolymère à blocs mis en oeuvre sont des esters d'acide acryliques avec des alcools linéaires ou ramifiés en C1-C8, et en particulier en C1-C4, comme, par exemple, l'acrylate de méthyle, l'acrylate d'éthyle, l'acrylate de propyle, l'acrylate de butyle ou l'acrylate de 2-éthyl-hexyle, ou bien des dérivés styréniques tels que le styrène.

13. Utilisation selon l'une des revendications précédentes, **caractérisée en ce que** le copolymère à blocs mis en oeuvre est un copolymère dibloc poly(acide acrylique)-poly(acrylate de butyle).

14. Utilisation selon la revendication 13, **caractérisée en ce que** le rapport massique (acide acrylique)/(acrylate de butyle est compris entre 10 :90 et 90 :10.

15. Utilisation selon l'une quelconque des revendications 1 à 12, **caractérisée en ce que** le copolymère à blocs mis en oeuvre est un copolymère dibloc dans lequel le bloc hydrophyle (h) est un poly'(acide acrylique) et le bloc hydrophobe (H) est un copolymère statistique à base de styrène et d'acide acrylique contenant au moins 25%, de préférence 50%, et de manière encore plus préférentielle 75% en poids d'acide acrylique par rapport au poids total du mélange.

16. Utilisation selon la revendication 15, **caractérisée en ce que** le rapport massique (bloc acide acrylique)/(bloc styrènique) est compris entre 95 :5 et 60 :40.

17. Utilisation selon l'une des revendications précédentes, **caractérisée en ce que** le copolymère à blocs mis en oeuvre est obtenu à l'issu d'un procédé de polymérisation radicalaire contrôlée, utilisant de préférence, à titre d'agent de contrôle, un ou plusieurs composés choisis parmi les dithioesters, les thioethers-thiones, les dithiocarbamates, et les xanthates, ladite polymérisation étant mise en oeuvre notamment en masse, en solvant, ou, en émulsion aqueuse, de façon à obtenir directement le copolymère sous forme d'une solution dans un solvant tel qu'un solvant organique, de l'eau ou un mélange eau-alcool.

18. Utilisation selon la revendication 17, **caractérisée en ce que** la solution de copolymère à blocs a une teneur comprise entre 0,01 et 10 % en masse, cette teneur étant exprimée par rapport à la masse totale de la solution.

19. Utilisation selon la revendication 18, **caractérisée en ce que** la solution de copolymère à blocs à une teneur comprise entre 0,05 et 7 % en masse, cette teneur étant exprimée par rapport à la masse totale de la solution.

20. Utilisation selon l'une des revendications 18 ou 19, **caractérisée en ce que** la solution de copolymère à blocs à une teneur comprise entre 0,1 et 3 % en masse, cette teneur étant exprimée par rapport à la masse totale de la solution.

21. Utilisation selon l'une quelconques des revendications 17 à 20, **caractérisée en ce que** copolymère à blocs est déposé sous forme d'un film d'une épaisseur comprise entre 10nm et 1µm.

22. Procédé d'application d'une composition aqueuse filmogène (F) sur une surface de faible énergie, comprenant les étapes suivantes ;
(A) on applique sur ladite surface une formulation comprenant de l'eau ou un mélange eau alcool à titre de solvant contenant un polymère à bloc à caractère amphiphile comprenant an moins un bloc de nature hydroplobe et au moins un bloc de nature hydrophile, le bloc de nature hydrophobe présentant des motifs hydrophiles dans une quantité comprise entre 0 % et 95 % en poids par rapport au poids total des motifs du bloc hydrophobe de façon à former sur ladite surface un dépôt sous la forme d'une couche continue; et
(B) on élimine au moins partiellement le solvant du dépôt obtenu à l'étape (A) ;et
(C) on applique sur la surface ainsi modifiée obtenue à l'étape(B) ladite composition aqueuse filmogène (F).

23. Procédé selon l'une quelconque des revendications précédentes, **caractérisée en ce que** la surface de basse énergie est une surface présentant un angle de contact d'une goutte d'eau déposée sur la surface correspondant à l'angle existant entre la surface et la tangente à la goutte à l'interface surface/eau/air est supérieur à 45°.

24. Procédé selon l'une quelconque des revendications précédentes, **caractérisée en ce que** la surface de basse énergie est une surface à base d'un polyamide, d'un polycarbonate, d'un polyéthylène-téréphtalate, d'un polyméthyl-méthacrylate, d'un polypropylène, d'un polyéthylène, d'un polystyrène, d'un polyester, d'un acrylonitrile butadiène styrène (ABS), ou d'un polychlorure de vinyle.

25. Procédé selon l'une quelconque des revendications précédentes, **caractérisée en ce que** le dépôt à base dudit copolymère à bloc est réalisé en appliquant, sur ladite surface de faible énergie, une solution comprenant ce copolymère à blocs, ou en immergeant ladite surface de faible énergie dans une solution à base du copolymère à blocs, puis en éliminant au moins partiellement le solvant initialement contenu dans cette solution.

26. Procédé selon l'une quelconque des revendications 22 à 25, **caractérisé en ce que** la formulation aqueuse appliquée sur la surface lors de l'étape (A) est une solution constituée essentiellement par ledit copolymère à blocs dans de l'eau ou dans un mélange eau/éthanol.

27. Procédé selon l'une des revendications 22 à 26, **caractérisé en ce que** la formulation aqueuse appliquée sur la surface lors de l'étape (A) contient ledit copolymère à blocs en une teneur comprise entre 0,01 et 10 % en masse, cette teneur étant exprimée par rapport à la massé totale de la formulation.

28. Procédé selon la revendication 27, **caractérisé en ce que** la formulation aqueuse appliquée sur la surface lors de l'étape (A) contient ledit copolymère à blocs en une teneur comprise entre 0,05 et 7% en masse, cette teneur étant exprimée par rapport à la masse totale de la formulation.

29. Procédé selon la revendication 27 ou 28, **caractérisé en ce que** la formulation aqueuse appliquée sur la surface lors de l'étape (A) contient ledit copolymère à blocs en une teneur comprise entre 0,1 et 3% en masse, cette teneur étant exprimée par rapport à la masse totale de la formulation.

30. Procédé selon l'une quelconques des revendications 22 à 29, **caractérisée en ce que** le dépôt de copolymère à blocs sous la forme d'une couche continue obtenue à l'étape B a une épaisseur comprise entre 10nm et 1µm.

31. Procédé selon la revendication 30, **caractérisée en ce que** le dépôt de copolymère à blocs sous la forme d'une couche continue obtenue à l'étape B a une épaisseur comprise entre 40nm et 600nm.

32. Procédé la revendication 30 ou 31, **caractérisée en ce que** le dépôt de copolymère à blocs sous la forme d'une couche continue obtenue à l'étape 8 a une épaisseur comprise entre 50nm et 500m.

33. Procédé selon l'une des revendications précédentes, **caractérisée en ce que** le copolymère à bloc mis en oeuvre est tel que défini dans l'une des revendications 9 à 16.

34. Procédé selon l'une des revendications précédentes, **caractérisée en ce que** le copolymère à blocs mis en oeuvre est obtenu à l'issu d'un procédé de polymérisation radicalaire contrôlée, utilisant de préférence, à titre d'agent de contrôle, un ou plusieurs composés choisis parmi les dithioesters, les thioethers-thiones, les dithiocarbamates, et les xanthates, ladite polymérisation étant mise en oeuvre en émulsion aqueuse, de façon à obtenir directement le copolymère sous forme d'une solution aqueuse ou hydro-alcoolique.

35. Procédé selon l'une des revendications 22 à 34, **caractérisé en ce que** la composition (F) est une dispersion aqueuse d'au moins un polymère.

36. Procédé selon la revendication 35, **caractérisé en ce que,** dans l'étape (B), la composition aqueuse (F) est appliquée sous la forme d'un film continu sur le dépôt à base du copolymère à blocs.

37. Procédé selon l'une des revendications 22 à 36 **caractérisé en ce que,** suite à l'application de ladite composition (F) de l'étape (C), la surface recouverte par ladite composition (F) est soumise à une étape (D) d'élimination de la phase solvant présente au sein de la composition appliquée.

38. Procédé selon l'une des revendications 22 à 37, **caractérisé en ce que** la composition (F) est une composition d'adhésif, une composition de peinture, ou une composition de mastic siliconé ou non.

## Claims

1. Use of a block copolymer of an amphiphilic nature comprising at least one block of a hydrophobic nature and at least one block of a hydrophilic nature, wherein the block of a hydrophobic nature has hydrophilic units in a quantity in the range of between 0% and 95% by wt. in relation to the total weight of the units of the hydrophobic block, and said copolymer is put into solution in water or a water-alcohol mixture to form a deposit on a low-energy surface that increases the affinity of said surface to water.

2. Use of a block copolymer of an amphiphilic nature comprising at least one block of a hydrophobic nature (H) and at least one block of a hydrophilic nature (h), wherein the block of a hydrophobic nature has hydrophilic units in a quantity in the range of between 0% and 95% by wt. in relation to the total weight of the units of the hydrophobic block, and said copolymer is put into solution in water or a water-alcohol mixture to form a deposit on a surface of a hydrophobic nature that renders said surface compatible with an environment of a hydrophilic nature.

3. Use according to claim 2, **characterised in that** the surface of a hydrophobic nature is a fibre.

4. Use of a block copolymer of an amphiphilic nature comprising at least one block of a hydrophobic nature (H) and at least one block of a hydrophilic nature (h), wherein the block of a hydrophobic nature has hydrophilic units in a quantity in the range of between 0% and 95% by wt. in relation to the total weight of the units of the hydrophobic block, and said copolymer is put into solution in water or a water-alcohol mixture to form a deposit on a low-energy surface that renders a subsequent application of an aqueous film-forming composition (F) on said low-energy effective and durable.

5. Use according to any one of the preceding claims, **characterised in that** the deposit based on said block copolymer is formed by applying a solution comprising this block copolymer to said low-energy surface or by immersing said low-energy surface into a solution based on the block copolymer, then at least partially eliminating the solvent initially contained in this solution.

6. Use according to any one of the preceding claims, **characterised in that** the low-energy surface is a surface having an angle of contact of a drop of water on the surface that corresponds to the existing angle between the surface and the tangent to the drop at the surface/water/air interface of more than 45°.

7. Use according to any one of the preceding claims, **characterised in that** the low-energy surface is a surface based on a polyamide, a polycarbonate, polyethylene terephthalate, polymethyl methacrylate, a polypropylene, a polyethylene, a polystyrene, a polyester, a acrylonitrile butadiene styrene (ABS), or a polyvinyl chloride.

8. Use according to any one of the preceding claims, **characterised in that** the block copolymer is deposited in the form of a continuous film.

9. Use according to one of the preceding claims, **characterised in that** the block copolymer used is such that its hydrophilic block (h) is formed at least partially of monomer units selected from:
• unsaturated ethylene mono- or di-carboxylic acids such as acrylic acid, methacrylic acid, itaconic acid, maleic acid or fumaric acid,
• monoalkyl esters of the above ethylene mono- or di-carboxylic acids, preferably with alcohols in C₁-C₄, as well as their derivative N-substituents such as, for example, 2-hydroxyethyl acrylate or methacrylate,
• the amides of unsaturated carboxylic acids such as acrylamide, methacrylamide or
• ethylene monomers comprising a ureido group such as ethylene urea ethyl methacrylamide or ethylene urea ethyl methacrylate, or
• ethylene monomers comprising at least one phosphate group or acid phosphonate such as vinylphosphonic acid or vinylidene phosphonic acid or
• acrylates or methacrylates of phosphatised polyethylene glycol or acrylates or methacrylates of phosphatised polypropylene glycol, or
• ethylene monomers comprising a sulphonic acid group or one of its alkaline salts or ammonium such as, for example, vinyl sulphonic acid, vinylbenzene sulphonic acid, alpha-acrylamido-methyl propane sulphonic acid, of 2-sulphoethylene-methacrylate, or
• cationic monomers selected from aminoalkyl (meth)acrylates, aminoalkyl (meth)acrylamides; monomers having at least one secondary, tertiary or quaternary amine function, or a heterocyclic group containing a nitrogen atom, vinylamine, ethylene imine; diallyldialkyl ammonium salts; these monomers being included either alone or in mixture, as well as in the form of salts, wherein the salts are preferably chosen such that the counter-ion is a halide such as e.g. a chloride, or a sulphate, a hydrosulphate, an alkyl sulphate (e.g. comprising 1 to 6 carbon atoms), a phosphate, a citrate, a formate, an acetate such as dimethyl amino ethyl (meth)acrylate, dimethyl amino propyl (meth)acrylate, ditertiobutyl aminoethyl (meth)acrylate, dimethyl amino methyl (meth)acrylamide, dimethyl amino propyl (meth)acrylamide; ethylene imine, vinylamine, 2-vinylpyridine, 4-vinylpyridine; trimethylammonium ethyl (meth)acrylate chloride, trimethylammonium ethyl acrylate methyl sulphate, benzyl dimethylammonium ethyl (meth)acrylate chloride, 4-benzobenzyl dimethyl ammonium ethyl acrylate chloride, trimethyl ammonium ethyl (meth)acrylamide chloride, vinylbenzyl trimethyl ammonium chloride; diallyldimethyl ammonium chloride, either singly or in mixture, or their corresponding salts, or
• polyvinyl alcohol resulting from the hydrolysis of a vinyl polyacetate, for example, or
• cyclical amides of vinylamine such as n-vinylpyrrolidone, or
• a hydrophilic monomer resulting from a chemical modification of a hydrophobic block e.g. by hydrolysis of an alkyl polyacrylate into acrylic polyacid.

10. Use according to claim 9, **characterised in that** the monomer units present within the hydrophilic block (h) of the block copolymer used are units of acrylic acid (AA), 2-acrylamido-2-methyl-propane sulphonic acid (AMPS), styrene sulphonate (SS), monomers comprising ureido groups, monomers comprising phosphate or phosphonate groups or mixtures thereof.

11. Use according to one of the preceding claims, **characterised in that** the block copolymer used is such that its hydrophobic block (H) is formed at least partially from monomer units selected from:
• styrene monomer derivatives such as styrene, alphamethyl styrene, paramethyl styrene or paratertiobutyl styrene, or
• esters of acrylic acid or methacrylic acid with alcohols in C1-C12, preferably C1-C8, possibly fluorinated such as e.g. methyl acrylate, ethyl acrylate, propyl acrylate, n-butyl acrylate, isobutyl acrylate, 2-ethylhexyl acrylate, t-butyl acrylate, methyl methacrylate, ethyl methacrylate, n-butyl methacrylate, isobutyl methacrylate,
• vinyl nitriles containing 3 to 12 carbon atoms and in particular acrylonitrile or methacrylonitrile,
• vinyl esters of carboxylic acids such as vinyl acetate, vinyl versatate, or vinyl propionate,
• vinyl halides, e.g. vinyl chloride, and
• diene monomers, e.g. butadiene or isoprene.

12. Use according to claim 11, **characterised in that** the monomer units present within the hydrophobic block (H) of the block copolymer are acrylic acid esters with linear or branched alcohols in C1-C8, and in particular in C1-C4, such as e.g. methyl acrylate, ethyl acrylate, propyl acrylate, butyl acrylate or 2-ethyl-hexyl acrylate, or also styrene derivatives such as styrene.

13. Use according to one of the preceding claims, **characterised in that** the block copolymer used is a di-block poly(acrylic acid)-poly(butyl acrylate) copolymer.

14. Use according to claim 13, **characterised in that** the mass ratio of (acrylic acid) /(butyl acrylate) is in the range of between 10:90 and 90:10.

15. Use according to any one of claims 1 to 12, **characterised in that** the block copolymer used is a di-block copolymer, in which the hydrophilic block (h) is a poly(acrylic acid) and the hydrophobic block (H) is a statistical copolymer based on styrene and acrylic acid containing at least 25%, preferably 50%, and more preferred 75% by weight of acrylic acid relative to the total weight of the mixture.

16. Use according to claim 15, **characterised in that** the mass ratio of (acrylic acid block) /styrene block) is in the range of between 95:5 and 60:40.

17. Use according to one of the preceding claims, **characterised in that** the block copolymer used is obtained from a controlled radical polymerisation process preferably using as control agent one or more compounds selected from di-thioesters, thion thioethers, di-thiocarbamates and xanthates, said polymerisation being conducted in particular in bulk, in solvent or in aqueous emulsion in order to directly obtain the copolymer in the form of a solution in a solvent such as an organic solvent, water or a water-alcohol mixture.

18. Use according to claim 17, **characterised in that** the block copolymer solution has a content in the range of between 0.01 and 10% mass, this content being expressed relative to the total mass of the solution.

19. Use according to claim 18, **characterised in that** the block copolymer solution has a content in the range of between 0.05 and 7% mass, this content being expressed relative to the total mass of the solution.

20. Use according to claim 18 or 19, **characterised in that** the block copolymer solution has a content in the range of between 0.01 and 3% mass, this content being expressed relative to the total mass of the solution.

21. Use according to any one of claims 17 to 20, **characterised in that** the block copolymer is deposited in the form of a film with a thickness in the range of between 10 nm and 1µm.

22. Process of applying an aqueous film-forming composition (F) onto a low-energy surface, comprising the following steps:
(A) a formulation is applied to said surface that comprises water or a water-alcohol mixture as solvent containing a block polymer of an amphiphilic nature comprising at least one block of a hydrophobic nature and at least one block of a hydrophilic nature, wherein the block of a hydrophobic nature has hydrophilic units in a quantity in the range of between 0% and 95% by wt. in relation to the total weight of the units of the hydrophobic block in order to form a deposit on said surface in the form of a continuous layer; and
(B) the solvent of the deposit obtained in step (A) is at least partially eliminated; and
(C) said aqueous film-forming composition (F) is applied to the thus modified surface obtained in step (B).

23. Process according to any one of the preceding claims, **characterised in that** the low-energy surface is a surface having an angle of contact of a drop of water deposited on the surface that corresponds to the existing angle between the surface and the tangent to the drop at the surface/water/air interface of more than 45°.

24. Process according to any one of the preceding claims, **characterised in that** the low-energy surface is a surface based on a polyamide, a polycarbonate, polyethylene terephthalate, polymethyl methacrylate, a polypropylene, a polyethylene, a polystyrene, a polyester, a acrylonitrile butadiene styrene (ABS), or a polyvinyl chloride.

25. Process according to any one of the preceding claims, **characterised in that** the deposit based on said block copolymer is formed by applying a solution to said low-energy surface comprising this block copolymer or by immersing said low-energy surface into a solution based on the block copolymer, then at least partially eliminating the solvent initially contained in this solution.

26. Process according to any one of claims 22 to 25, **characterised in that** the aqueous formulation applied to the surface in step (A) is a solution formed essentially by said block copolymer in water or in a water/ethanol mixture.

27. Process according to any one of claims 22 to 26, **characterised in that** the aqueous formulation applied to the surface in step (A) contains said base copolymer in a content in the range of between 0.01 and 10% mass, this content being expressed relative to the total mass of the formulation.

28. Process according to claim 27, **characterised in that** the aqueous formulation applied to the surface in step (A) contains said base copolymer in a content in the range of between 0.05 and 7% mass, this content being expressed relative to the total mass of the formulation.

29. Process according to claim 27 or 28, **characterised in that** the aqueous formulation applied to the surface in step (A) contains said block copolymer solution in a content in the range of between 0.01 and 3% mass, this content being expressed relative to the total mass of the formulation.

30. Process according to any one of claims 22 to 29, **characterised in that** the deposit of the block copolymer in the form of a continuous layer obtained in step (B) has a thickness in the range of between 10 nm and 1µm.

31. Process according to claim 30, **characterised in that** the deposit of the block copolymer in the form of a continuous layer obtained in step (B) has a thickness in the range of between 40 nm and 600 nm.

32. Process according to claim 30 or 31, **characterised in that** the deposit of the block copolymer in the form of a continuous layer obtained in step (B) has a thickness in the range of between 50 nm and 500 nm.

33. Process according to one of the preceding claims, **characterised in that** the block copolymer used is such as that defined in one of claims 9 to 16.

34. Process according to one of the preceding claims, **characterised in that** the block copolymer used is obtained from a controlled radical polymerisation process preferably using as control agent one or more compounds selected from di-thioesters, thion thioethers, di-thiocarbamates and xanthates, said polymerisation being conducted in aqueous emulsion in order to directly obtain the copolymer in the form of an aqueous solution or a water-alcohol solution.

35. Process according to one of claims 22 to 34, **characterised in that** the composition (F) is an aqueous dispersion of at least one polymer.

36. Process according to claim 35, **characterised in that** in step (B) the aqueous composition (F) is applied in the form of continuos film onto the block copolymer-based deposit.

37. Process according to one of claims 22 to 36, **characterised in that** following the application of said composition (F) in step (C), the surface covered by said composition (F) is subjected to a step (D) of eliminating the solvent phase present within the applied composition.

38. Process according to one of claims 22 to 37, **characterised in that** the composition (F) is an adhesive composition, a paint composition or a silicone or non-silicone gum composition.

## Patentansprüche

1. Verwendung eines Blockcopolymers mit amphiphielem Charakter, umfassend mindestens einen hydrophoben Block und mindestens einen hydrophilen Block, wobei der hydrophobe Block hydrophile Einheiten in einer Menge zwischen 0 und 95 Gew.-%, bezogen auf das Gesamtgewicht der Einheiten des hydrophoben Blocks, aufweist, wobei das Copolymer in Wasser oder in einer Mischung aus Wasser und Alkohol gelöst ist, um auf einer Oberfläche mit geringer Energie ein Depot zu erzeugen, in welchem die Oberfläche eine erhöhte Affinität gegenüber Wasser aufweist.

2. Verwendung eines Blockcopolymers mit amphiphliem Charakter, umfassend mindestens einen hydrophoben Block (H) und mindestens einen hydrophilen Block (h), wobei der hydrophobe Block hydrophile Einheiten in einer Menge zwischen 0 und 95 Gew.-%, bezogen auf das Gesamtgewicht der Einheiten des hydrophoben Blocks, aufweist, wobei das Copolymer in Wasser oder in einer Mischung aus Wasser und Alkohol gelöst ist, um auf einer hydrophoben Oberfläche ein Depot zu erzeugen, welches diese Oberfläche mit einem hydrophilen Umfeld verträglicher macht.

3. Verwendung nach Anspruch 2, **dadurch gekennzeichnet, dass** die hydrophobe Oberfläche eine Faser ist.

4. Verwendung eines Blockcopolymers mit amphiphliem Charakter, umfassend mindestens einen hydrophoben Block (H) und mindestens einen hydrophilen Block (h), wobei der hydrophobe Block hydrophile Einheiten in einer Menge zwischen 0 und 95 Gew.-%, bezogen auf das Gesamtgewicht der Einheiten des hydrophoben Blocks, aufweist, wobei das Copolymer in Wasser oder in einer Mischung aus Wasser und Alkohol gelöst ist, um auf einer Oberfläche mit geringer Energie ein Depot zu erzeugen, durch welches eine weitere Applikation einer wässrigen filmbildenden Zusammensetzung (F) auf der Oberfläche mit geringer Energie wirkungsvoll und dauerhaft möglich ist.

5. Verwendung nach einem der vorherigen Ansprüche, **dadurch gekennzeichnet, dass** das Depot auf Basis des Blockcopolymers durch Applizieren einer Lösung, umfassend das Blockcopolymer, auf die Oberfläche mit geringer Energie oder durch Eintauschen der Oberfläche mit geringer Energie in eine Lösung auf Basis von dem Blockcopolymer, und anschließend zumindest teilweises Entfernen des anfänglich verwendeten Lösemittels, welches in der Lösung enthalten ist, erhalten wird.

6. Verwendung nach einem der vorherigen Ansprüche, **dadurch gekennzeichnet, dass** die Oberfläche mit geringer Energie eine Oberfläche ist, welche einen Kontaktwinkel mit einem Wassertropfen, welcher auf die Oberfläche gegeben wurde, von 45° oder mehr bildet, wobei der Winkel demjenigen Winkel zwischen der Oberfläche und der Tropfentangente an der Grenzfläche Oberfläche / Wasser / Luft entspricht.

7. Verwendung nach einem der vorherigen Ansprüche, **dadurch gekennzeichnet, dass** die Oberfläche mit geringer Energie einer Oberfläche auf Basis von einem Polyamid, einem Polycarbonat, einem Polyethylenterephthalat, einem Methylpolymethacrylat, einem Polypropylen, einem Polyethylen, einem Polystyrol, einem Polyester, einem Acrylnitril-Butadien-Styrol (ABS) oder einem Polyvinylchlorid entspricht.

8. Verwendung nach einem der vorherigen Ansprüche, **dadurch gekennzeichnet, dass** das Depot des Blockcopolymers in der Form eines kontinuierlichen Filmes realisiert wird.

9. Verwendung nach einem der vorherigen Ansprüche, **dadurch gekennzeichnet, dass** das verwendete Blockcopolymer so ausgebildet ist, dass sein hydrophiler Block (h) zumindest teilweise von Monomereinheiten gebildet wird, welche ausgewählt werden aus:
- der ethylenisch ungesättigten Mono- oder Dicarbonsäuren, wie Acrylsäure, Methacrylsäure, Itakonsäure, Maleinsäure oder Fumarsäure,
- den ethylenisch ungesättigten Monoalkylestern der zuvor erwähnten Dicarbonsäuren, vorzugsweise mit (C₁-C₄)-Alkoholen, sowie deren N-substituierten Derivate, wie zum Beispiel dem 2-Hydroxyethylacrylat oder -methacrylat,
- den Amiden der ungesättigten Carbonsäuren, wie dem Acrylamid, dem Metharylamid oder
- den ethylenischen Monomeren, enthaltend eine Harnstoffgruppe,
wie dem Ethylmethacrylamidethylenharnstoff oder dem Ethylmethacrylatethylenharnstoff, oder
- den ethylenischen Monomeren, welche mindestens eine Phosphat- oder Phosphonatsäuregruppe enthalten, wie die Vinylphosphonsäure oder die Vinylidenphosphonsäure oder
- den Acrylaten oder Methacrylaten von Polyethylenglykolphosphaten oder den Acrylaten oder Methacrylaten von Polypropylenglykolphosphaten oder
- den ethylenischen Monomeren, welche eine Sulfonsäuregruppe oder eines ihrer alkalischen Salze oder Ammoniumsalze umfassen, wie zum Beispiel die Vinylsulfonsäure, die Vinylbenzolsulfonsäure, die a-Acrylamidomethylpropansulfonsäure oder das 2-Sulfoethylenmethacrylat, oder
- den kationischen Monomeren, welche ausgewählt sind aus den Aminoalkyl(meth)acrylaten, den Aminoalkyl(meth)acrylamiden; den Monomeren, welche mindestens eine sekundäre, tertiäre oder quaternäre Aminfunktion oder eine heterocyclische Gruppe, welche ein Stickstoffatom umfasst, umfassen, das Vinylamin, das Ethylenimin; die Ammoniumsalze von Diallyldialkyl; wobei diese Monomere allein oder in Kombination sowie in der Form der Salze verwendet werden können, wobei die Salze vorzugsweise so ausgewählt werden, dass das Gegenion ein Halogenid ist, wie zum Beispiel ein Chlorid; oder ein Sulfat, ein Hydrogensulfat, ein Alkylsulfat (zum Beispiel umfassend 1 bis 6 Kohlenstoffatome), ein Phosphat, ein Citrat, ein Formiat, ein Acetat, wie das Methylaminoethyl(meth)acrylat, das Dimethylaminopropyl(meth)acrylat, das Di-tert.-butylaminoethyl(meth)acrylat, das Dimethylaminomethyl-(meth)acrylamid, das Dimethylaminopropyl(meth)acrylamid; das Ethylenimin, das Vinylamin, das 2-Vinylpyridin, das 4-Vinylpyridin, das Chlorid des Trimethylammoniumethyl(meth)acrylats, das Methylsulfat des Trimethylammoniumethylacrylats, das Chlorid des Benzyldime-thylammoniumethyl(meth)acrylats, das Chlorid des 4-Benzoylbenzyldimethylammoniumethylacrylats, das Chlorid des Trimethylammoniumethyl(meth)acrylamids, das Chlorid des Trimethylammoniumvinylbenzols; das Chlorid des Ammoniumdiallyldimethyls, jeweils alleine oder in Mischung, oder deren entsprechenden Salze, oder
- einem vinylischen Alkohol, welcher beispielsweise aus der Hydrolyse eines Vinylpolyacetats resultiert, oder
- den cyclischen Amiden des Vinylamins, wie N-Vinylpyrrolidon, oder
- einem hydrophilen Monomer, welches aus einer chemischen Modifikation eines hydrophoben Blockes zum Beispiel durch Hydrolyse eines Polyacrylatalkyls einer Acrylsäure stammt.

10. Verwendung nach einem der vorherigen Ansprüche, **dadurch gekennzeichnet, dass** die Monomereinheiten, welche in dem hydrophilen Block (h) des verwendeten Blockcopolymers zugegen sind, Einheiten der Acrylsäure (AA), der 2-Acrylamido-2-methylpropansulfonsäure (AMPS), des Styrolsulfonats (SS), Harnstoffgruppen enthaltende Monomere, Phosphat oder Phosponat enthaltende Monomere oder deren Mischungen sind.

11. Verwendung nach einem der vorherigen Ansprüche, **dadurch gekennzeichnet, dass** das verwendete Blockcopolymer so ausgebildet ist, dass sein hydrophober Block (H) zumindest teilweise aus Monomereinheiten aufgebaut ist, welche ausgewählt werden aus:
- den Styrol-Derivatmonomeren, wie Styrol, α-Methylstyrol, para-Methylstyrol oder dem para-tert.-Butylstyrol oder
- den Estern der Acrylsäure oder der Methacrylsäure mit (C₁ C₁₂)-Alkoholen, vorzugsweise (C₁-C₈)-Alkoholen, welche gegebenenfalls fluoriert sind, wie zum Beispiel Methylacrylat, Ethylacrylat, Propylacrylat, n-Butylacrylat, Isobutylacrylat, 2-Ethylhexylacrylat, tert.-Butylacrylat, Methylmethacrylat, Ethylmethacrylat, n-Butylmethacrylat, Isobutylmethacrylat,
- den Vinyinitrilen, welche 3 bis 12 Kohlenstoffatome enthalten, und insbesondere Acrylnitril oder Methcicrylnitril,
- Vinylestern der Carbonsäuren wie Vinylacetat, Vinylversatat oder Vinylpropionat, und
- Vinylhalogeniden, wie zum Beispiel Vinylchlorid; und
- Dienmonomeren, wie zum Beispiel Butadien oder Isopren.

12. Verwendung nach einem der vorherigen Ansprüche, **dadurch gekennzeichnet, dass** die Monomereinheiten, welche in dem hydrophoben Block (H) des verwendeten Blockcopolymers zugegen sind, Ester der Acrylsäure mit linearen oder verzweigten (C₁-C₈)-Alkoholen, vorzugsweise (C₁-C₄)-Alkoholen, wie zum Beispiel Methylacrylat. Ethylacrylat, Propylacrylat. Butylacrylat oder 2-Ethylhexylacrylat, oder Styrol-Derivate, wie Styrol, sind.

13. Verwendung nach einem der vorherigen Ansprüche, **dadurch gekennzeichnet, dass** das verwendete Blockcopolymer ein Polyacrylsäure-Polybutylacrylat-Diblockcopolymer ist.

14. Verwendung nach Anspruch 13, **dadurch gekennzeichnet, dass** das Massenverhältnis Acrylsäure / Butylacrylat zwischen 10 : 90 und 90 :10 liegt.

15. Verwendung nach einem der Ansprüche 1 bis 12, **dadurch gekennzeichnet, dass** das verwendete Blockcopolymer ein Diblockcopolymer ist, in welchem der hydrophile Block (h) eine Polyacrylsäure ist und der hydrophobe Block (H) ein statistisches Copolymer auf der Basis von Styrol und Acrylsäure ist, welches mindestens 25 Gew.-%, vorzugsweise 50 Gew.-%, noch weiter bevorzugt 75 Gew.-%, an Acrylsäure im Verhältnis zu dem Gesamtgewicht der Mischung enthält.

16. Verwendung nach Anspruch 15, **dadurch gekennzeichnet, dass** das Gewichtsverhältnis des Blocks der Acrylsäure zu dem Block des Styrols zwischen 95 : 5 und 60 :40 liegt.

17. Verwendung nach einem der vorherigen Ansprüche, **dadurch gekennzeichnet, dass** das verwendete Blockcopolymer erhalten wird durch ein Verfahren der radikalisch kontrollierten Polymerisation unter Verwendung von vorzugsweise einer oder mehrerer Verbindungen, welche ausgewählt sind aus Dithioestern, Thioetherthionen, Dithiocarbamaten und Xanthaten als Steuerungsmittel, und wobei die Polymerisation insbesondere in der Masse, in Lösung oder in einer wässrigen Emulsion so durchgeführt wird, dass das Copolymer direkt in einer wässrigen Lösung oder einer Lösung aus Wasser und Alkohol erhalten wird.

18. Verwendung nach Anspruch 17, **dadurch gekennzeichnet, dass** die Konzentration des Blockcopolymers in der Lösung zwischen 0,01 und 10 Massen-%, bezogen auf die Gesamtmasse der Lösung, ist.

19. Verwendung nach Anspruch 18, **dadurch gekennzeichnet, dass** die Konzentration des Blockcopolymers in der Lösung zwischen 0,05 und 7 Massen-%, bezogen auf die Gesamtmasse der Lösung, ist.

20. Verwendung nach Anspruch 18 oder 19, **dadurch gekennzeichnet, dass** die Konzentration des Blockcopolymers in der Lösung zwischen 0,1 und 3 Massen-%, bezogen auf die Gesamtmasse der Lösung, ist.

21. Verwendung nach einem der Ansprüche 17 bis 20, **dadurch gekennzeichnet, dass** das Blockcopolymer in der Form eines Filmes mit einer Dicke zwischen 10 nm und 1 µm abgeschieden wird.

22. Verfahren zur Applikation einer wässrigen filmbildenden Zusammensetzung (F) auf einer Oberfläche mit geringer Energie, umfassend die folgenden Schritte:
(a) Applizieren auf der Oberfläche eine Formulierung, umfassend Wasser oder eine Mischung aus Wasser und Alkohol als Lösemittel, enthaltend ein Blockcopolymer mit amphiphilen Charakter, umfassend mindestens einen hydrophoben Block und mindestens einen hydrophilen Block, wobei der hydrophobe Block hydrophile Einheiten in einer Menge zwischen 0 und 95 Gew.-%, bezogen auf das Gesamtgewicht der Einheiten des hydrophoben Blocks, aufweist, um auf der Oberfläche ein Depot in der Form eine kontinuierlichen Beschichtung zu erzeugen; und
(b) zumindest teilweises Entfernen des Lösemittels des Depots, welches in Schritt (a) erhalten wurde; und
(c) Applizieren auf der so in Schritt (b) erhaltenen modifizierten Oberfläche die wässrige filmbildende Zusammensetzung (F).

23. Verfahren nach einem der vorherigen Ansprüche, **dadurch gekennzeichnet, dass** die Oberfläche mit geringer Energie eine Oberfläche ist, welche einen Kontaktwinkel von einem Wassertropfen, welcher auf die Oberfläche gegeben wurde, von 45° oder mehr aufweist, wobei der Winkel demjenigen Winkel zwischen der Oberfläche und der Tropfentangente an der Grenzfläche Oberfläche / Wasser / Luft entspricht.

24. Verfahren nach einem der vorherigen Ansprüchen, **dadurch gekennzeichnet, dass** die Oberfläche mit geringer Energie einer Oberfläche auf Basis von einem Polyamid, einem Polycarbonat, einem Polyethylenterephthalat, einem Methylpolymethacrylat, einem Polypropylen, einem Polyethylen, einem Polystyrol, einem Polyester, einem Acrylnitril-Butadien-Styrol (ABS) oder einem Polyvinylchlorid entspricht.

25. Verfahren nach einem der vorherigen Ansprüchen, **dadurch gekennzeichnet, dass** das Depot auf Basis des Blockcopolymers durch Applizieren einer Lösung, umfassend das Blockcopolymer, auf die Oberfläche mit geringer Energie oder durch Eintauschen der Oberfläche mit geringer Energie in eine Lösung auf Basis von dem Blockcopolymer, und anschließend durch zumindest teilweises Entfernen des anfänglich verwendeten Lösemittels, welches in der Lösung enthalten ist, erhalten wird.

26. Verfahren nach einem der vorherigen Ansprüchen, **dadurch gekennzeichnet, dass** die wässrige auf der Oberfläche in Schritt (a) applizierte Lösung eine Lösung ist, welche im Wesentlichen aus dem Copolymer in dem Wasser oder in der Mischung Wasser / Ethanol besteht.

27. Verfahren nach einem der Ansprüche 22 bis 26, **dadurch gekennzeichnet, dass** die wässrige auf der Oberfläche in Schritt (a) applizierte Lösung das Blockcopolymer mit einem Gehalt von 0,01 bis 10 Massen-%, bezogen auf die gesamte Masse der Formulierung, umfasst.

28. Verfahren nach Anspruch 27, **dadurch gekennzeichnet, dass** die wässrige auf der Oberfläche in Schritt (a) applizierte Lösung das Blockcopolymer mit einem Gehalt von 0,05 bis 7 Massen-%, bezogen auf die gesamte Masse der Formulierung, umfasst.

29. Verfahren nach Anspruch 27 oder 28, **dadurch gekennzeichnet, dass** die wässrige auf der Oberfläche in Schritt (a) applizierte Lösung das Blockcopolymer mit einem Gehalt von 0,1 bis 3 Massen-%, bezogen auf die gesamte Masse der Formulierung, umfasst.

30. Verfahren nach einem der Ansprüche 22 bis 29, **dadurch gekennzeichnet, dass** das Depot des Blockcopolymers in der Form eines kontinuierlichen Filmes, welcher in Schritt (b) erhalten wird, eine Dicke zwischen 10 nm und 1 µm aufweist.

31. Verfahren nach Anspruch 30, **dadurch gekennzeichnet, dass** das Depot des Blockcopolymers in der Form eines kontinuierlichen Filmes, welcher in Schritt (b) erhalten wird, eine Dicke zwischen 40 nm und 600 nm aufweist.

32. Verfahren nach Anspruch 30 oder 31, **dadurch gekennzeichnet, dass** das Depot des Blockcopolymers in der Form eines kontinuierlichen Filmes, welcher in Schritt (b) erhalten wird, eine Dicke zwischen 50 nm und 500 nm aufweist.

33. Verfahren nach einem der vorherigen Ansprüche, **dadurch gekennzeichnet, dass** das verwendete Blockcopolymer eines ist, welches in den Ansprüchen 9 bis 16 definiert ist.

34. Verfahren nach einem der vorherigen Ansprüche, **dadurch gekennzeichnet, dass** das verwendete Blockcopolymer erhalten wird durch ein Verfahren der radikalisch kontrollierten Polymerisation unter Verwendung von vorzugsweise einer oder mehrerer Verbindungen, welche ausgewählt sind aus Dithioestern, Thioetherthionen, Dithiocarbamaten und Xanthaten als Steuerungsmittel, und wobei die Polymerisation insbesondere in der Masse, in Lösung oder in einer wässrigen Emulsion durchgeführt wird, sodass das Copolymer direkt in einer wässrigen Lösung oder einer Lösung aus Wasser und Alkohol erhalten wird.

35. Verfahren nach einem der Ansprüche 22 bis 34, **dadurch gekennzeichnet, dass** die Zusammensetzung (F) eine wässrige Dispersion mindestens eines Polymers ist.

36. Verfahren nach Anspruch 35, **dadurch gekennzeichnet, dass** in Schritt (b) die wässrige Zusammensetzung (F) in der Form eines kontinuierlichen Filmes auf dem Depot auf Basis des Blockcopolymers aufgetragen wird.

37. Verfahren nach einem der Ansprüche 22 bis 36, **dadurch gekennzeichnet, dass** nach der Applikation der Zusammensetzung (F) in Schritt (C) die mit der Zusammensetzung (F) bedeckte Oberfläche einem Schritt (d) des Entfernens der Lösemittelphase, welche in der applizierten Zusammensetzung enthalten ist, unterworfen wird.

38. Verfahren nach einem der Ansprüche 22 bis 37, **dadurch gekennzeichnet, dass** die Zusammensetzung eine Haft-Zusammensetzung, eine Farb-Zusammensetzung oder eine gegebenenfalls silikonhaltige Grundier-Zusammensetzung ist.
